# EUROPEAN PATENT APPLICATION

(11) **EP 4 542 692 A1**
(43) Date of publication of application: **23.04.2025**
(21) Application number: 24191412.6
(22) Date of filing: 29.07.2024
(51) Int. Cl.: H01M 8/04111

(54) **FUEL CELL SYSTEM**

(30) Priority: 18.10.2023 US 202318489619
(71) Applicant: Honeywell International Inc., Charlotte, NC 28202 (US)
(72) Inventor: WHITE, Christopher James, Charlotte, 28202 (US)
(74) Representative: Haseltine Lake Kempner LLP

(57) **Abstract**

In some examples, an exhaust system of a fuel cell system includes a flow device configured to discharge a first portion of a fuel cell exhaust as an exhaust flow and a second portion of the fuel cell exhaust as a second flow. A turbine of the exhaust system is configured to receive at least a portion of the exhaust flow and discharge a turbine exhaust. An ejector configured to receive the turbine exhaust at a first inlet and receive the second flow from the flow device. The ejector is configured to provide a suction on the turbine exhaust using the second flow. The exhaust system includes control circuitry configured to cause the flow device to alter the second flow.

## Description

### TECHNICAL FIELD

The present disclosure relates to a fuel cell system.

### STATEMENT REGARDING FEDERALLY SPONSORED RESEARCH OR DEVELOPMENT

This invention was made with Government Support under Contract No. 101101967 awarded by (UK ATI) - United Kingdom - Aerospace Technologies Institute/UKRI (Innovate UK). The Government has certain rights in the invention.

### BACKGROUND

A fuel cell system generally includes one or more fuel cells assembled to form a fuel cell stack. The fuel cell stack normally includes an anode side, a cathode side, and one or more membranes separating the anode side and the cathode side. The fuel cell system is typically configured to receive a fuel on the anode side and an oxidizing agent on the cathode side. During operation of the fuel cell stack, protons originating from the fuel migrate through the membranes from the anode side and react at the cathode side with the oxidizing agent. Commonly the proton is a hydrogen ion and the oxidizing agent comprises oxygen. The hydrogen ion and the oxygen may combine at the cathode side, resulting in the generation of electric power and the production of water. The water may be exhausted from the fuel cell system as a cathode exhaust. Some portion of the water may diffuse back across the membranes and be exhausted from the fuel cell system as an anode exhaust.

### SUMMARY

The present disclosure describes an exhaust system configured to receive an exhaust flow of a fuel cell assembly. In examples, the fuel cell assembly is configured to receive a fuel comprising hydrogen (e.g., H2, a hydrocarbon, or some other molecule including hydrogen) and an oxidizing agent comprising oxygen (e.g., 02, air, or some other molecule comprising oxygen). The fuel cell assembly is configured to generate electrical power using the fuel and the oxidizing agent and discharge an anode exhaust from an anode side and a cathode exhaust from a cathode side.

The fuel cell system includes a fuel cell assembly configured to receive an oxidizing agent and a fuel and discharge a fuel cell exhaust (e.g., a cathode exhaust and/or anode exhaust) to an exhaust system. The exhaust system includes a flow device configured to substantially separate the fuel cell exhaust into an exhaust flow comprising a first portion of the fuel cell exhaust and a second flow comprising a second portion of the fuel cell exhaust. A turbine of the exhaust system is configured to receive and extract energy from at least a portion of the exhaust flow and discharge a turbine exhaust. The flow device may be positioned to alter the relative magnitudes of the exhaust flow and the second flow, such that the flow device controls the amount of the fuel cell exhaust which proceeds to the turbine as the exhaust flow and the amount of the fuel cell exhaust which substantially avoids the turbine.

The exhaust system includes an ejector configured to receive the turbine exhaust from the turbine at a first inlet and receive the second flow from the flow device at a second inlet. The ejector is configured to provide a suction on the turbine exhaust using the second flow. The ejector is configured such that altering the suction alters a differential pressure through the turbine (e.g., a differential pressure from a turbine inlet to a turbine outlet). Hence, flow device, by controlling the amount of the second flow, may substantially control the differential pressure through the turbine.

The exhaust system includes control circuitry configured to cause the flow device to alter the second flow. The control circuitry is configured to receive a signal indicative of a flow parameter associated with operation of the fuel cell assembly, such as a flow of the fuel and/or a flow of the oxidizing agent. The control circuitry is configured to cause the flow device to alter the second flow based on the signal. For example, if flow through the fuel cell assembly is lower than desired for a given operating condition, the control circuitry may cause the flow device to increase the second flow (thus increasing the flow bypassing the turbine) to increase flow through the fuel cell assembly. The increased second flow may increase the suction on the turbine exhaust by the ejector, increasing the differential pressure through the turbine to at least partially compensate for a reduction in the exhaust flow that may occur when the flow device increases the second flow.

In an example, a system comprises: a fuel cell assembly configured to receive an inlet feed at a fuel cell inlet and discharge a fuel cell exhaust at a fuel cell outlet fluidically coupled to the fuel cell inlet, wherein the inlet feed comprises one of an oxidizing agent or a fuel, and wherein the fuel cell assembly is configured to oxidize the fuel using the oxidizing agent; a flow device configured to receive the fuel cell exhaust, discharge an exhaust flow comprising a first portion of the fuel cell exhaust and a second flow comprising a second portion of the fuel cell exhaust, and alter a flow rate of at least the second flow; a turbine configured to receive at least a portion of the exhaust flow and discharge a turbine exhaust comprising the portion of the exhaust flow; an ejector including a first inlet configured to receive the turbine exhaust and a second inlet configured to receive the second flow, wherein the ejector is configured to provide a suction on the turbine exhaust using the second flow; and control circuitry configured to: receive a signal indicative of a flow parameter, and cause the flow device to alter the flow rate of the second flow based on the flow parameter.

In an example, a system comprises: a fuel cell assembly configured to receive an inlet feed at a fuel cell inlet and discharge a fuel cell exhaust at a fuel cell outlet fluidically coupled to the fuel cell inlet, wherein the inlet feed comprises one of an oxidizing agent or a fuel, and wherein the fuel cell assembly is configured to oxidize the fuel using the oxidizing agent; a flow device configured to receive the fuel cell exhaust, discharge an exhaust flow comprising a first portion of the fuel cell exhaust and a second flow comprising a second portion of the fuel cell exhaust, and alter a flow rate of at least the second flow; a reheater configured to cause a first heat transfer from the exhaust flow; a condenser configured to cause a second heat transfer from the exhaust flow subsequent to the first heat transfer; an extractor configured to extract liquid water from the exhaust flow subsequent to the second heat transfer, wherein the extractor is configured to discharge a first portion of the exhaust flow as a water flow and a second portion of the exhaust flow as a dehumidified exhaust flow, and wherein the reheater is configured to transfer heat from the exhaust flow to the dehumidified exhaust flow to cause the first heat transfer; a turbine configured to receive the dehumidified exhaust flow at a turbine inlet and discharge a turbine exhaust at a turbine outlet, wherein the turbine exhaust comprises at least a portion of the dehumidified exhaust flow, and wherein the condenser is configured to transfer heat from the exhaust flow to the turbine exhaust to cause the second heat transfer; an ejector including a first inlet configured to receive the turbine exhaust and a second inlet configured to receive the second flow, wherein the ejector is configured to provide a suction on the turbine exhaust using the second flow, and wherein the ejector is configured to alter a differential pressure between the portion of the exhaust flow at the turbine inlet and the turbine exhaust at the turbine outlet when the flow device alters the flow rate of the second flow; and control circuitry configured to: receive a signal indicative of a flow parameter, and cause the flow device to alter the flow rate of the second flow based on the flow parameter.

In an example, a method comprises: receiving, by an inlet of a fuel cell assembly, an inlet feed comprising one of an oxidizing agent or a fuel at a fuel cell inlet of the fuel cell assembly, wherein the fuel cell assembly is configured to oxidize the fuel using the oxidizing agent; exhausting, by an outlet of the fuel cell assembly in fluidic communication with the inlet, a fuel cell exhaust from an exhaust of the fuel cell assembly; discharging, by a flow device, an exhaust flow comprising a first portion of the fuel cell exhaust and a second flow comprising a second portion of the fuel cell exhaust; receiving, by a turbine, at least a portion of the exhaust flow; discharging, by the turbine, a turbine exhaust comprising the portion of the exhaust flow; receiving, by an ejector, the turbine exhaust at a first inlet of the ejector and the second flow at a second inlet of the ejector, wherein the ejector is configured to provide a suction on the turbine exhaust using the second flow; receiving, by control circuitry, a signal indicative of a flow parameter; and causing, by the control circuitry, the flow device to alter a flow rate of the second flow based on the flow parameter.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a schematic illustration of an example fuel cell system.
FIG. 2 is a schematic illustration of an example exhaust system of a fuel cell system.
FIG. 3 is a schematic illustration of an exhaust system of a fuel cell system including an ejector.
FIG. 4 is a schematic illustration of an exhaust system of a fuel cell system including a water extraction system.
FIG. 5 is a schematic illustration of an exhaust system of a fuel cell system including a first compressor and a second compressor.
FIG. 6 is a flow diagram illustrating an example method of controlling a flow through an exhaust system of a fuel cell system.

### DETAILED DESCRIPTION

Fuel cell assemblies in a fuel cell system typically provide electrical power by enabling the transfer of a charge-carrier ion between a fuel and an oxidizing agent. A fuel cell assembly may include a fuel cell stack comprising a membrane and/or electrolyte configured to transfer the charge-carrier ion between a cathode side of the fuel cell assembly and an anode side of the fuel cell assembly. The transfer of the charge-carrier ion between the cathode side and the anode side generates an electric potential between the anode side and the cathode side, which may be utilized to provide electrical power. In some fuel cell assemblies, the charge-carrier ion transfers from the cathode side to the anode side. In some fuel cell assemblies, a charge-carrier ion may transfer from the anode side to the cathode side.

The fuel cell assembly is generally configured to receive a flow of fuel and a flow of an oxidizing agent. For example, the fuel may comprise hydrogen (e.g., H2, a hydrocarbon, or some other molecule including hydrogen). The flow of oxidizing agent may comprise oxygen (e.g., 02, air, or some other molecule comprising oxygen). The charge-carrier ion is produced and transferred through the membrane and/or electrode as a first half of an oxidation-reduction (redox) reaction occurs at the cathode side and a second half of the redox reaction occurs at the anode side. As the fuel cell assembly receives the fuel and the oxidizing agent, the fuel cell assembly may provide electrical power to a distribution system of a building and/or a vehicle such as an automobile, an aircraft, a ship, and/or other vehicle, and/or other machines and/or devices configured to receive electrical power.

During operation of the fuel cell assembly, the fuel cell assembly may discharge a cathode exhaust from the cathode side and an anode exhaust from the anode side as the fuel cell provides the electrical power. At least one of (and often both) the cathode exhaust and the anode exhaust include water produced as a reaction product of the redox reaction and/or present as a result of migration through the electrolyte and/or membrane. The cathode exhaust and/or anode exhaust further include thermal energy (e.g., heat energy) resulting from the redox reaction, resulting from the conditions of the fuel and oxidizing agent feeds, and/or for other reasons.

During operation, a necessary and/or desired flow rate of the fuel and/or the oxidizing agent required by the fuel cell assembly may vary based on, for example, the power produced by and/or demanded from the fuel cell assembly, and/or for other reasons. For example, an increase in the power demanded may necessitate an increase in the flow rate of the fuel and/or the oxidizing agent, while a decrease in the power demanded may necessitate a decrease in the flow rate of the fuel and/or the oxidizing agent. Hence, a fuel cell system may include provisions to monitor flows through the fuel cell and adjust one or more components within the fuel cell system based on, for example, one or more operating conditions of the fuel cell assembly.

In some examples, fuel cell systems include a turbine configured to receive a cell exhaust (e.g., one of the cathode exhaust or the anode exhaust) for recovery of at least some portion of the thermal energy. The turbine may extract energy from the cell exhaust and transfer the extracted energy to an electrical generator for the generation of electrical power, and/or transfer the extracted energy as mechanical energy via a turbine shaft. In examples, the turbine is configured to provide compressor power to an inlet compressor configured to compress the flow of fuel or the flow of an oxidizing agent entering the fuel cell assembly.

The fuel cell system disclosed includes an exhaust system including a flow device, a turbine, and an ejector. The flow device (e.g., one or more valves) is configured to receive a fuel cell exhaust from a fuel cell assembly. In examples, the fuel cell exhaust is at least one of a cathode exhaust or an anode exhaust. The flow device is configured to divide the fuel cell exhaust into an exhaust flow comprising a first portion of the fuel cell exhaust and a second flow comprising a second portion of the fuel cell exhaust. The flow device is configured to alter (e.g., increase or decrease) a flow rate of at least the second flow. In examples, the flow device is configured to alter both the exhaust flow and the second flow. For example, the flow device may be configured to increase the second flow while decreasing the exhaust flow, and/or decrease the second flow while increasing the exhaust flow.

The turbine is configured to receive at least a portion of the exhaust flow from the flow device. The turbine is configured extract energy from the portion of the exhaust flow as the portion of the exhaust flow enters a turbine inlet and discharges from a turbine outlet as a turbine exhaust. The turbine may be configured to distribute the energy extracted as mechanical power (e.g., via a turbine shaft) to an electrical generator, a compressor, and/or to other components.

The ejector is configured to receive both the turbine exhaust from the turbine and the second flow from the flow device. The ejector is configured to provide a suction on the turbine exhaust using the second flow. In examples, the ejector may be configured to substantially accelerate the second flow (e.g., through a nozzle of the ejector) to generate a low pressure region within the ejector (e.g., within a suction chamber of the ejector). The pressure of the low pressure region may be dependent on a flow rate of the second flow entering the ejector. For example, an increase in the flow rate of the second flow may decrease the pressure in the low pressure region. A decrease in the flow rate of the second flow may increase the pressure in the low pressure region.

The ejector may be configured such that the turbine exhaust flows into the low pressure region generated. Hence, altering (e.g., increasing or decreasing) the pressure of the low pressure region may alter (e.g., increase or decrease) a pressure gradient of the turbine exhaust from the suction chamber to the turbine, altering the differential pressure from the turbine inlet to the turbine outlet. Thus, the amount of the second flow provided to the ejector by the flow device may substantially control the differential pressure through the turbine.

The exhaust system may be configured such that flow device causes the second flow to substantially bypass the turbine as the second flow flows from the flow device to the ejector. For example, the exhaust system may define a first flow path from the flow device to the ejector and define a second flow path from the flow device to the ejector. The first flow path may include the turbine (e.g., include the turbine inlet and the turbine outlet), while the second flow path may substantially avoid the turbine (e.g., avoid the turbine inlet and the turbine outlet). The flow device may be configured to discharge the exhaust flow to the first flow path and discharge the second flow to the second flow path, such that at least a portion of the exhaust flow proceeds through the turbine via the first flow path as the second flow substantially avoids the turbine via the second flow path. In examples, the first flow path and the second flow path define parallel flow paths from the flow device to the ejector.

The exhaust system may be configured such that a flow rate of the exhaust flow through the first flow path relative to a flow rate of the second flow through the second flow path impacts one or more flow rates through the fuel cell assembly. For example, the ejector may be configured to discharge a combined flow comprising both the exhaust flow and the second flow when the ejector receives the exhaust flow via the first flow path and receives the second flow via the second flow path. The ejector may be configured to discharge the combined flow to a discharge pipe, which may be a pipe, conduit, and/or other structure configured to receive the combined flow from the ejector. The exhaust system may be configured such that the first flow path (which includes the turbine) defines a first flow resistance from the flow device to the discharge pipe, and the second flow path (which bypasses the turbine) defines a second flow resistance from the flow device to the discharge pipe. The first flow resistance may differ from the second flow resistance. In examples, the first flow resistance is greater than the second flow resistance.

The respective flow rates of the exhaust flow through the first flow path (e.g., as the exhaust stream overcomes the first flow resistance) and the second flow through the second flow path (e.g., as the second flow overcomes the second flow resistance) may act to generate a backpressure on the fuel cell exhaust discharged by the fuel cell assembly. The backpressure generated may impact the flow through the fuel cell assembly. Further, the backpressure generated may be dependent on the respective flow rates of the exhaust flow through the first flow path and the second flow through the second flow path. Hence, the exhaust system may be configured to alter a flow rate of one or more flows through the fuel cell assembly by altering (e.g., using the flow device) the respective flow rates of the exhaust flow through the first flow path and the second flow through the second flow path.

The exhaust system includes control circuitry configured to cause the flow device to alter at least the second flow to, for example, alter a flow rate of one or more flows through the fuel cell assembly. The control circuitry is configured to receive a signal indicative of a flow parameter associated with the one or more flows, such as a flow of the fuel and/or a flow of the oxidizing agent. The control circuitry is configured to cause the flow device to alter the second flow based on the signal. For example, if flow through the fuel cell assembly is lower than desired for a given operating condition of the fuel cell assembly, the control circuitry may cause the flow device to increase the second flow (thus increasing the flow bypassing the turbine) to increase flow through the fuel cell assembly. The increased second flow may increase the suction on the turbine exhaust by the ejector, increasing the differential pressure through the turbine to at least partially compensate for a reduction in the exhaust flow that may occur when the flow device increases the second flow.

In some examples, the exhaust system includes a water extraction system configured to extract water from the fuel cell exhaust discharged by the fuel cell assembly to, for example, enhance the operation of the fuel cell assembly. For example, performance of an electrolyte and/or membrane within a fuel cell of the fuel cell assembly may be enhanced by keeping the electrolyte and/or membrane hydrated during operation of the fuel cell assembly. However, during certain operating conditions, the flow of fuel and/or the flow of oxidizing agent may not have a sufficient water content to provide sufficient hydration, and the fuel cell assembly performance may suffer. The water extraction system may be configured to provide some portion of extracted water (e.g., via a water distribution system) to one or more inlet feeds to the fuel cell assembly (e.g., to a flow of the oxidizing agent and/or a flow of the fuel).

For example, during operation of the fuel cell assembly, the fuel cell assembly may discharge a cathode exhaust from the cathode side and an anode exhaust from the anode side as the fuel cell provides electrical power. At least one of the cathode exhaust and the anode exhaust may include water produced from one or more redox reactions and/or present as a result of migration through the electrolyte and/or membrane. The exhaust system may be configured to extract water from the fuel cell exhaust of the fuel cell assembly (e.g., at least one of a cathode exhaust and/or an anode exhaust) and provide the extracted water to at least one of the oxidizing agent and/or the fuel.

In some examples, the fuel cell system includes a fuel cell assembly configured to receive a fuel comprising hydrogen at an anode side and an oxidizing agent comprising oxygen at a cathode side. The fuel cell assembly may generate water (H20) as a result of a reduction of H+ charge-carrier ions occurring at the cathode side and exhaust a significant portion of the water produced via the cathode exhaust. The exhaust system may be configured to receive the cathode exhaust. The fuel cell system may be configured to extract water from the cathode exhaust using a water extraction system. In examples, the fuel cell system is configured to provide some portion of the water extracted to the flow of oxidizing agent to, for example, substantially maintain sufficient hydration of the fuel cell stack within the fuel cell assembly.

In examples, the water extraction system includes at least a condenser and an extractor (e.g., a water extractor). The condenser is configured to transfer heat from the exhaust flow of the fuel cell system (e.g., downstream of the flow device) to condense water vapor comprising the exhaust flow to liquid water. The condenser is configured to transfer the heat using the turbine exhaust from the turbine as a coolant and discharge the thus cooled exhaust flow. The cooled exhaust flow exiting the condenser may have a reduced temperature and/or pressure relative to the exhaust flow entering the condenser, and/or have an increased fraction of liquid phase relative to the exhaust flow entering the condenser. The condenser is configured to discharge the cooled exhaust flow to the extractor.

The extractor is configured to substantially separate the liquid phase and the vapor phase of the cooled exhaust flow. The extractor is configured to discharge a water flow substantially comprising the liquid phase and a dehumidified exhaust flow substantially comprising the vapor phase. Hence, the dehumidified exhaust flow comprises at least a portion of the exhaust flow. The water extraction system is configured to provide the provide the dehumidified exhaust flow to the turbine. The water distribution system may be configured to provide the water flow to a water distribution system, which may provide at least some portion of the water flow to an inlet feed of the fuel cell system.

The turbine is configured to extract energy from the dehumidified exhaust flow and discharge the turbine exhaust to the compressor. The turbine may substantially expand the dehumidified exhaust flow, such that the turbine exhaust exiting the turbine has a reduced temperature relative to the dehumidified exhaust flow entering the turbine (and, e.g., relative to the exhaust flow entering the condenser). Hence, the water extraction system may be configured to utilize the turbine exhaust to transfer heat from the exhaust flow within the condenser to cause the condensation of water vapor from the exhaust flow, avoiding the need for a separate coolant system to provide a coolant to the condenser.

In examples, the water distribution system includes a reheater configured to conduct an initial heat transfer from the exhaust flow prior to the exhaust flow entering the condenser. In examples, the reheater is configured to receive the dehumidified exhaust flow from the extractor and cause a heat transfer from the exhaust flow to the dehumidified exhaust flow. The reheater may be configured to discharge the thus heated dehumidified exhaust flow to the turbine. The transfer of heat from the exhaust flow to the dehumidified exhaust flow may increase a quality (e.g., a fraction of total mass in the vapor phase) of the dehumidified exhaust flow prior to its entry into the turbine. Hence, the water distribution system may be configured to utilize heat transferred from the exhaust flow to enhance a turbine power generated by the turbine as the turbine extracts energy from the dehumidified exhaust flow. The turbine may be configured to generate turbine power (e.g., a mechanical power) using the dehumidified exhaust flow.

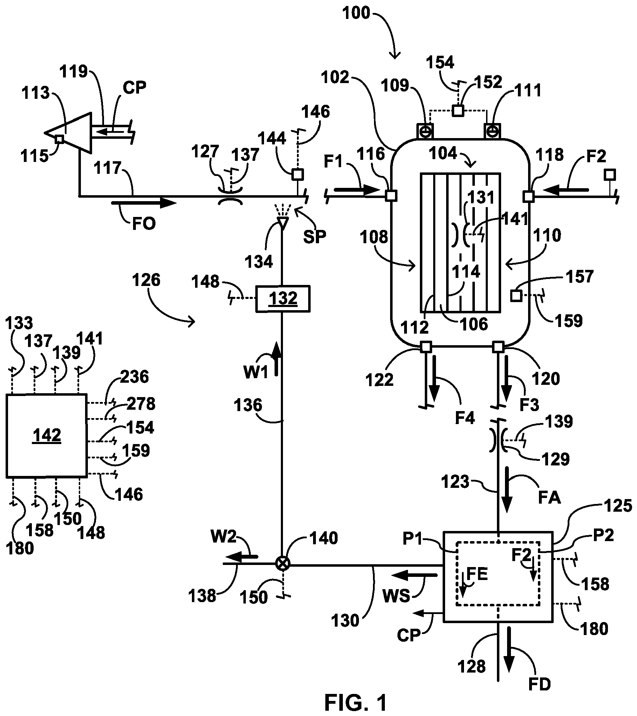

FIG. 1 is a schematic diagram of a fuel cell system 100 including a fuel cell assembly 102. Fuel cell assembly 102 includes fuel cell stack 104. Fuel cell stack 104 includes one or more fuel cells such as fuel cell 106. Fuel cell system 100 is configured to provide an first feed F1 to a first side 108 of fuel cell stack 104 and a second feed F2 to a second side 110 of fuel cell stack 104. Fuel cell stack 104 includes one or more fuel cells such as fuel cell 106. One or more fuel cells of fuel cell stack 104 (e.g., fuel cell 106) separate first side 108 and second side 110. Fuel cell 106 is configured to enable the transfer of a charge-carrier ion from first feed F1 to second feed F2, or vice-versa. Fuel cell stack 104 is configured to generate an electric potential (e.g., a voltage) from a first electrode 109 to a second electrode 111 as ions transfer across fuel cell 106 from first feed F1 to second feed F2, or vice-versa. In some examples, fuel cell system 100 includes a sensor 152 configured to sense an electrical power generated by and/or demanded from fuel cell assembly 102 (e.g., an electrical power derived from the electric potential between first electrode 109 and second electrode 111).

In examples, fuel cell 106 includes a proton exchange membrane (PEM), such as a solid polymer electrolyte proton conducting membrane. In some examples, fuel cell 106 is a solid oxide fuel cell, a molten carbonate fuel cell, a phosphoric acid fuel cell, an alkaline fuel cell, a direct methanol fuel cell, and/or another type of fuel cell. In examples, one of first feed F1 or second feed F2 includes an oxidizing agent and the other of first feed F1 or second feed F2 includes a fuel. In examples, one of first side 108 or second side 110 is a cathode side of fuel cell stack 104 and the other of first side 108 or second side 110 is an anode side of fuel cell stack 104.

In examples, fuel cell stack 104 is configured to ionize the fuel at one of the second side 110 or the first side 108 and enable travel of the resulting charge-carrier ions to the other of second side 110 or first side 108. One or more (e.g., each of) the fuel cells of fuel cell stack 104 may define a first cell electrode (e.g., one of an anode or a cathode) and a second cell electrode (e.g., the other of the anode or the cathode), such as first cell electrode 112 of fuel cell 106 and second cell electrode 114 of fuel cell 106. In examples, one or more of the first cell electrodes (e.g., each of) may be fluidically and electrically connected together to form and/or define first side 108. One or more of the second cell electrodes (e.g., each of) may be fluidically and electrically connected together to form and/or define second side 110. Fuel cell assembly 102 may include a first inlet 116 in fluidic communication with first side 108 and/or a second inlet 118 in fluidic communication with second side 110. First inlet 116 may be configured to channel and/or direct first feed F1 to cause fluidic communication of first feed F1 and first cell electrode 112. Second inlet 118 may be configured to channel and/or direct second feed F2 to cause fluidic communication of second feed F2 and second cell electrode 114.

Fuel cell system 100 may include a inlet compressor 113 configured to provide an inlet feed FO to at least one of first inlet 116 or second inlet 118. In examples, inlet feed FO comprises at least some portion of (e.g., substantially all) of first feed F1. In some examples, inlet feed FO comprises at least some portion of (e.g., substantially all) of second feed F2. Inlet compressor 113 may be configured to receive inlet feed FO at an initial feed pressure and discharge the inlet feed at an discharge feed pressure greater than the initial feed pressure. For example, inlet compressor 113 may be configured to receive inlet feed FO via a compressor inlet 115 (e.g., substantially at the initial pressure) and discharge inlet feed FO (e.g., substantially at the discharge feed pressure) to a pipe or other conduit 117 ("pipe 117"). Pipe 117 may be configured to convey inlet feed FO substantially at the discharge feed pressure from inlet compressor 113 to at least one of first inlet 116 or second inlet 118. In some examples, inlet compressor 113 is configured to provide inlet feed FO at a discharge feed pressure greater than about 29 psi (200 kilopascals (kPa)), such as a pressure between about 29 psi and 43.5 psi (300 kPa).

Inlet compressor 113 may be configured to compress inlet feed FO using a compressor power CP supplied to inlet compressor 113. Compressor power CP may be mechanical power, electrical power, or a combination of mechanical power and electrical power. In examples, inlet compressor 113 is a shaft-driven compressor configured to receive at least some portion of compressor power CP as a shaft power (e.g., mechanical power) via a compressor shaft 119. In some examples, inlet compressor 113 is a rotary compressor including an impellor configured to compress a fluid (e.g., inlet feed FO) when the impellor rotates in response to a rotary torque on the impellor. Inlet compressor 113 may be configured to receive the rotary torque via compressor shaft 119.

In some examples, compressor shaft 119 may include a plurality of compressor shafts configured to receive compressor power CP. For example, compressor shaft 119 may include a first compressor shaft and a second compressor shaft. Inlet compressor 113 may include a low pressure compressor (e.g., a low pressure section of inlet compressor 113) configured to receive a first portion of compressor power CP via the first compressor shaft. Inlet compressor 113 may include a high pressure compressor (e.g., a high pressure section of inlet compressor 113) configured to receive a second portion of compressor power CP via the second shaft. The low pressure compressor may be configured to compress a first portion of inlet feed FO using the first portion of compressor power CP. The high pressure compressor may be configured to compress a second portion of inlet feed FO and/or additionally compress the first portion using the second portion of compressor power CP. In some examples, compressor shaft 119 is a twin-spool shaft configured such that an outer compressor shaft (e.g., one of the first compressor shaft or the second compressor shaft) may rotate about an inner compressor shaft (e.g., the other of the first compressor shaft or the second compressor shaft) and about a longitudinal axis as the inner compressor shaft rotates about the longitudinal axis.

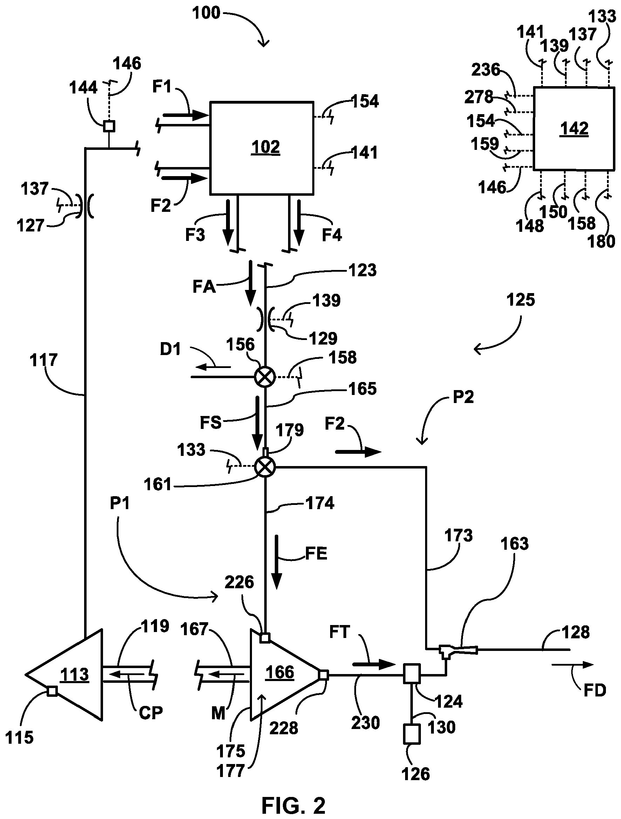

In examples, inlet compressor 113 and/or compressor shaft 119 is configured to receive compressor power CP from a turbine (e.g., turbine 166 (FIG. 2)). In examples, inlet compressor 113 and/or compressor shaft 119 is configured to receive compressor power CP from a motor (not shown). In some examples, inlet compressor 113 is configured to compress inlet feed FO using electrical power derived from the electric potential between first electrode 109 and second electrode 111.

In examples, inlet feed FO includes an oxidizing agent (e.g., 02, air, and/or some other molecule containing oxygen). Pipe 117 may be in fluidic communication with first inlet 116, such that inlet feed FO comprises at least some portion of (e.g., substantially all) of first feed F1. Fuel cell assembly 102 may be configured to oxidize some portion of a fuel received via second inlet 118 using the oxidizing agent of first inlet feed F1. Inlet compressor 113 may be configured to increase the pressure of inlet feed FO to increase a pressure of inlet feed F1 to, for example, increase the efficiency of fuel cell stack 104 when fuel cell stack 104 generates the electric potential from first electrode 109 to second electrode 111.

In some examples, fuel cell 106 includes a PEM configured to transfer a hydrogen ion (H+) between first side 108 and second side 110. For example, first cell electrode 112 may be a cathode of fuel cell 106 and second cell electrode 114 may be an anode of fuel cell 106. Fuel cell 106 may be configured to transfer H+ from the anode to the cathode. In examples, first side 108 is a cathode side of fuel cell stack 104. Second side 110 may be an anode side of fuel cell stack 104. In examples, first feed F1 includes diatomic oxygen (02) and second feed F2 includes diatomic hydrogen (H2), a hydrocarbon, or some other fuel including hydrogen.

Fuel cell assembly 102 may include a first outlet 120 configured to discharge a first exhaust flow F3 (e.g., when fuel cell assembly 102 generates an electric potential from a first electrode 109 to a second electrode 111). In examples, first outlet 120 is in fluidic communication with (e.g., fluidically coupled to) first inlet 116. In examples, first exhaust flow F3 includes a portion of first feed F1. For example, first exhaust flow F3 may include one or more compounds comprising atoms introduced to fuel cell assembly 102 by first feed F 1, and/or one or more constituent compounds of first feed F1 which substantially pass through fuel cell assembly 102 to be discharged through first outlet 120 via first exhaust flow F3. In examples, first exhaust flow F3 comprises water when fuel cell assembly 102 generates an electric potential (e.g., a voltage) from a first electrode 109 to a second electrode 111. In some examples, first feed F1 comprises oxygen (e.g., air) and second feed F2 comprises hydrogen (e.g., H2, a hydrocarbon, or some other molecule including hydrogen), and first exhaust flow F3 comprises water, a portion of the oxygen (e.g., air) which entered fuel cell assembly 102 via first feed F1, nitrogen, and/or other components comprising first feed F1. In examples, first side 108 is a cathode side of fuel cell stack 104 and first exhaust flow F3 is a cathode exhaust of fuel cell stack 104.

Fuel cell assembly 102 may include a second outlet 122 configured to discharge a second exhaust flow F4 (e.g., when fuel cell assembly 102 generates an electric potential from a first electrode 109 to a second electrode 111). In examples, second outlet 122 is in fluidic communication with (e.g., fluidically coupled to) second inlet 118. In examples, second exhaust flow F4 includes a portion of second feed F2. For example, second exhaust flow F4 may include one or more compounds comprising atoms introduced to fuel cell assembly 102 by second feed F2, and/or one or more constituent compounds of second feed F2 which substantially pass through fuel cell assembly 102 to be discharged through second outlet 122 via second exhaust flow F4. In some examples, second feed F2 comprises hydrogen (e.g., H2, a hydrocarbon, or some other molecule comprising hydrogen) and second exhaust F4 comprises water, a portion of the hydrogen and/or hydrogen comprising molecule which entered fuel cell assembly 102 via second feed F2, carbon dioxide, nitrogen, and/or other components comprising second feed F2. In examples, second side 110 is an anode side of fuel cell stack 104 and second exhaust flow F4 is an anode exhaust of fuel cell stack 104.

In some examples, during operation of fuel cell assembly 102, first exhaust flow F3 and/or second exhaust flow F4 include a thermal energy (e.g., heat energy) resulting from redox reaction between the oxidizing agent and the fuel, resulting from the conditions of inlet feed F1 and/or inlet feed F2, and/or for other reasons. For example, fuel cell assembly 102 may generate thermal energy (e.g., heat energy) as a result of a difference in the heat for formation of products of and reactants of the redox reaction. First exhaust flow F3 and/or second exhaust flow F4 may act to remove at least some portion of this thermal energy from fuel cell assembly 102 as first exhaust flow F3 discharges from first outlet 120 and/or second exhaust flow F4 discharges from second outlet 122. Thus, in some examples, first exhaust flow F3 may have a greater enthalpy than first feed F1 and/or second feed F2. In some examples, second exhaust flow F4 may have a greater enthalpy than first feed F1 and/or second feed F2.

Fuel cell system 100 is configured to recapture at least portion of the thermal energy from one or more exhaust flows of fuel cell system 100 (e.g., one or more of first exhaust flow F3 and second exhaust flow F4) using an exhaust system 125. In examples, fuel cell system 100 is configured such that exhaust system 125 is in fluidic communication with at least one of first outlet 120 and/or second outlet 122. For example, exhaust system 125 may be configured to receive an exhaust FA from fuel cell assembly 102, where exhaust FA comprises one or more of first exhaust flow F3 and/or second cell exhaust flow F4. In examples, fuel cell system 100 includes a pipe or other conduit 123 ("pipe 123") configured to convey exhaust FA from fuel cell assembly 102 to exhaust system 125. Exhaust system 125 may be configured to extract energy from exhaust FA and transfer the extracted energy to an electrical generator for the generation of electrical power, and/or transfer the extracted energy to one or more components of fuel cell system 100 as mechanical energy. In examples, exhaust system 125 is configured to extract energy from exhaust FA and transfer at least some portion of the extracted energy to inlet compressor 113 as compressor power CP. Exhaust system 125 may be configured to discharge a discharge flow FD (e.g., via an exhaust discharge 128), with discharge FD comprising at least some portion of exhaust FA.

In examples, fuel cell system 100 may be configured to provide discharge flow FD to one or more other systems, such as a cooling system, a pressurizing system, an environmental control system, and/or others. For example, when fuel cell system 100 is configured to provide electrical power to a distribution system of a building and/or vehicle such as an automobile, an aircraft, a ship, and/or other vehicle, fuel cell system 100 may be configured to provide discharge flow FD to one or more other systems of the building and/or the vehicle. In some examples, fuel cell system 100 is configured to exhaust discharge flow FD to an external environment outside of the building and/or vehicle.

During operation, a necessary or desired flow rate of the fuel and/or the oxidizing agent supplied to fuel cell assembly 102 may vary based on the power produced by and/or demanded from fuel cell assembly 102 (e.g., as sensed by sensor 152), and/or for other reasons. For example, an increase in the power demanded may necessitate an increase in the flow rate of the fuel and/or the oxidizing agent, while a decrease in the power demanded may necessitate a decrease in the flow rate of the fuel and/or the oxidizing agent. In examples, fuel cell system 100 is configured to monitor one or more flows entering, discharging, and/or passing through fuel cell assembly 102 and alter a flow rate of the one or more flows based on, for example, an operating condition of fuel cell assembly 102.

Fuel cell system 100 may be configured to alter the one or more flows entering, discharging, and/or passing through fuel cell assembly 102 using exhaust system 125. For example, exhaust system 125 may be configured to alter a flow rate of exhaust FA entering exhaust system 125 via pipe 123 and exiting exhaust system 125 via exhaust discharge 128. Fuel cell system 100 may be configured such that an alteration in the flow rate of exhaust FA causes an alteration to the one or more flows entering, discharging, and/or passing through fuel cell assembly 102. For example, when exhaust system 125 is configured such that exhaust FA comprises first exhaust F3 (e.g., a cathode exhaust), altering the flow rate of exhaust FA may correspondingly alter the flow rate of first exhaust F3 and/or other flows in fluidic communication with first exhaust F3 (e.g., first feed F1, such as an oxidizing agent feed). When exhaust system 125 is configured such that exhaust FA comprises second exhaust F4 (e.g., an anode exhaust), altering the flow rate of exhaust FA may correspondingly alter the flow rate of second exhaust F4 and/or other flows in fluidic communication with second exhaust F4 (e.g., second feed F2, such as a fuel feed).

In examples, exhaust system 125 defines a first flow path P1 from pipe 123 to exhaust discharge 128 and defines a second flow path P2 from pipe 123 to exhaust discharge 128. Exhaust system 125 may be configured to divide (e.g., substantially split) the exhaust stream FA entering exhaust system 125 into an exhaust stream FE flowing through first flow path P1 and a second flow F2 flowing through second flow path P2. In examples, first flow path F 1 defines a first flow resistance and second flow path F2 defines a second flow resistance different (e.g., less than) the first flow resistance. For example, first flow path F1 may define the first flow resistance by virtue of one or more components of exhaust system 125 within first flow path P1. Second flow path F2 may define the second flow resistance by virtue of one or more components of exhaust system 125 within second flow path P2.

The respective flow rates of exhaust flow FE through first flow path P1 and the second flow F2 through second flow path P2 may act to generate a backpressure on exhaust FA, altering the flow rate of exhaust FA. In examples, exhaust system 125 is configured to alter and/or control the respective flow rates of exhaust flow FE and second flow F2 to alter and/or control the flow rate of exhaust FA, and thereby alter the one or more flows entering, discharging, and/or passing through fuel cell assembly 102 (e.g., one or more of first inlet F 1, second inlet F2, first exhaust F3, second exhaust F4, and/or a flow in fluidic communication with at least one of first side 108 or second side 110).

In examples, exhaust system 125 includes control circuitry 142 configured to alter and/or control the respective flow rates of exhaust flow FE and second flow F2. Control circuitry 142 may be configured to cause exhaust system 125 to alter and/or control exhaust flow FE and second flow F2 in response to one or more operating conditions of fuel cell assembly 102. For example, control circuitry 142 may be configured to communicate with exhaust system 125 via a communication link 133. Control circuitry 142 may be configured to cause exhaust system 125 to alter and/or control exhaust flow FE and second flow F2 in response to a signal indicative of a system flow entering, discharging, and/or passing through fuel cell assembly 102.

For example, fuel cell system 100 may include a flow sensor 127 configured to monitor a flow rate of inlet feed FO. Fuel cell system 100 may include a flow sensor 129 configured to monitor a flow rate of Exhaust FA. Fuel cell system 100 may include a flow sensor 131 configured to monitor a flow rate of one or more flows within fuel cell assembly 102 (e.g., a flow through and/or within first side 108 and/or second side 110). Control circuitry 142 may be configured to substantially monitor a flow using one or more of sensor 127, sensor 129, and/or sensor 131 and cause exhaust system 125 to adjust one or more components of fuel cell system 100 to cause an alteration in the flow. In examples, control circuitry 142 is configured to receive a signal indicative of the flow sensed by flow sensor 127 via a communication link 137, receive a signal indicative of the flow sensed by flow sensor 129 via a communication link 139, and/or receive a signal indicative of the flow sensed by flow sensor 131 via a communication link 141. In examples, sensor 127, sensor 129, and/or sensor 131 may be configured to sense a volume flow rate, a mass flow rate, and/or another parameter indicative of a flow rate such as a flow velocity and/or pressure.

In examples, control circuitry 142 may be configured to determine a flow threshold for a system flow entering, discharging, and/or passing through fuel cell assembly 102. The system flow may be, for example, one of first feed F1, first feed F2, first exhaust F3, second exhaust F4, and/or a flow passing through fuel cell assembly 102. Control circuitry 142 may be configured to compare the system flow to the flow threshold and cause exhaust system 125 to alter and/or control exhaust flow FE and second flow F2 in response to a difference between the system flow and the flow threshold.

Control circuitry 142 may be configured to determine the flow threshold based on an operating parameter of fuel cell assembly 102 and/or fuel cell system 100. For example, control circuitry 142 may be configured to determine the flow threshold based on a power sensed by sensor 152 and a signal indicative of the power communicated to control circuitry 142 via a communication link 154. Control circuitry 142 may be configured to determine the flow threshold based on a temperature and/or pressure within fuel cell assembly 102 sensed by a sensor 157 and communicated via a communication link 159. Control circuitry 142 may be configured to determine the flow threshold based on any operating parameter sensed and communicated to control circuitry 142 by one or more components and/or sensors of fuel cell system 100. In some examples, control circuitry 142 is configured to monitor a system flow within fuel cell system 100 (e.g., using sensor 127, sensor 129, sensor 131, and/or others) and cause exhaust system 125 to control and/or alter exhaust flow FA to substantially maintain the system flow at a particular value and/or within a range of values.

Hence, fuel cell system 100 may be configured to alter the one or more system flows entering, discharging, and/or passing through fuel cell assembly 102 using exhaust system 125. Fuel cell system 100 (e.g., control circuitry 142) may cause exhaust system 125 to alter and/or control the flow rates of exhaust flow FE flowing through first flow path P1 and/or second flow F2 flowing through second flow path P2 to alter and/or control the flow rate of exhaust FA. Altering and/or controlling the flow rates of exhaust flow FE and/or second flow F2 may alter the flow rate of exhaust FA, thereby altering a flow rate of the system flow entering, discharging, and/or passing through fuel cell assembly 102. 110).

In some examples, exhaust system 125 is configured to extract water from exhaust FA and discharge the extracted water via a water flow WS. Discharge FD may comprise at least a portion of exhaust FA less the extracted water (e.g., less water flow WS). For example, during some operations of fuel cell stack 104, protons originating from a hydrogen component of a fuel (e.g., second feed F2) supplied to an anode side (e.g., second side 110) migrate through one or more fuel cells such as fuel cell 106 and react at a cathode side (e.g., first side 108) with an oxidizing agent (e.g., an oxidizing agent provided by first feed F1). The hydrogen and oxygen may combine (e.g., at the cathode side) to generate electrical power and produce a volume of water. A portion of the water may diffuse back through fuel cell 106 (e.g., through a membrane and/or electrolyte of fuel cell 106) to the anode side of the fuel cell stack. Fuel cell assembly 102 may be configured to discharge at least some portion of the water produced via first exhaust flow F3 and/or second exhaust flow F4. Hence, during operation of fuel cell assembly 102, water may be present in first exhaust flow F3 (e.g., a cathode exhaust) and/or second exhaust flow F4 (e.g., an anode exhaust).

In examples, fuel cell system 100 includes a water distribution system 126 configured to receive water flow WS from water extraction system 124. Water distribution system 126 may be configured to provide at least some portion of water flow WS to one or more inlet flows of fuel cell system 100 (e.g., one or more of inlet feed FO, first feed F1, and/or second feed F2). Water distribution system 126 may be configured to provide some portion of water flow WS to the inlet flow to enhance the operation of fuel cell stack 104 by, for example, keeping one or more individual fuel cells such as fuel cell 106 moist during operation of fuel cell stack 104. This may protect membranes and/or electrolyte within fuel cell 106 from damage and/or enhance an operating efficiency of fuel cell stack 104.

For example, water distribution system 126 may include a pipe or other conduit 130 ("pipe 130") configured to convey water flow WS from water extraction system 124 and transfer the at least some portion to the inlet flow. In examples, water distribution system 126 is configured to provide a first extracted flow W1 to the inlet flow. First extracted flow W1 may be some portion of water flow WS (e.g., some portion of or substantially all of water flow WS). Water distribution system 126 may be configured to discharge a second discharge flow W2. Second extracted flow W2 may be some portion of water flow WS (e.g., some portion of or substantially all of water flow WS). In examples, second discharge flow W2 substantially comprises water flow WS less first extracted flow W1. In examples, water distribution system 126 includes a pipe or other conduit 136 ("pipe 136") configured to convey first discharge flow W1 from water extraction system 124 to the inlet flow. Water distribution system 126 may include a pipe or other conduit 138 ("pipe 138") configured to convey second discharge flow W2.

Water distribution system 126 may be configured to control a flow rate of first discharge flow W1 and/or a flow rate of second discharge flow W2. In examples, water distribution system 126 includes a flow control device 140 (e.g., a valve) configured to control the flow rate of first discharge flow W1 and/or the flow rate of second discharge flow W2. For example, flow control device 140 may be configured to receive water flow WS and position one or more restricting elements within flow control device 140 to control the flow rate of first discharge flow W1 and/or second discharge flow W2. In examples, flow control device 140 is a flow divider valve configured to substantially split water flow WS into first discharge flow W1 and second discharge flow W2. In examples, flow control device 140 is configured to increase the flow rate of first discharge flow W1 while decreasing the flow rate of second discharge flow W2, and/or decrease the flow rate of first discharge flow W1 while increasing the flow rate of second discharge flow W2.

In examples, water distribution system 126 includes a water transfer device 132 (e.g., a pump or other fluid pressurization system) configured to transfer water (e.g., first extracted flow W 1) extracted by water extraction system 124 to the inlet flow of fuel cell assembly 102 (e.g., one or more of inlet feed FO, first feed F1 and/or second feed F2). In examples, water transfer device 132 is configured to receive first extracted flow W1 from pipe 136 and transfer first extracted flow W1 to the inlet flow. In some examples, water distribution system 126 includes a distributor 134 (e.g., a nozzle or other fluid distribution device) configured to transfer water (e.g., first extracted flow W1) extracted by water extraction system 124 to the inlet flow. For example, distributor 134 may be a nozzle configured to provide a water spray SP to the inlet flow, wherein water spray SP comprises at least some portion of water flow WS and/or first extracted flow W1. In examples, distributor 134 is configured to receive first extracted flow W1 from water transfer device 132.

Fuel cell system 100 may include one or more sensors 144 ("sensors 144") configured to communicate with control circuitry 142 (e.g., via communication link 146). In examples, sensors 144 are configured to sense one or more parameters (e.g., a pressure, a temperature, a flow rate, a humidity (e.g., a relative humidity), or another parameter) of at least one of inlet flow FO, first feed F 1, second feed F2, first exhaust flow F3, and/or second exhaust flow F4). Sensors 144 may be configured to communicate a signal indicative of the parameter to control circuitry 142 via communication link 146 or another communication link.

Sensors 144 may be configured to sense at least one of a humidity (e.g., a relative humidity), a temperature, a pressure, a flow rate, and/or another flow parameter of one of inlet flow FO, first feed F1, or second feed F2 and communicate a signal indicative of the humidity, the temperature, the pressure, the flow rate, and/or the other flow parameter to control circuitry 142. Control circuitry 142 may be configured to cause water distribution system 126 to control a flow rate of first extracted flow W1 based on the indicative signal from sensors 144. For example, control circuitry 142 may communicate with water transfer device 132 (e.g., using a communication link 148) and/or flow control device 140 (e.g., using a communication link 150) to increase, decrease, or hold steady the flow rate of first extracted flow W1 based on the indicative signal from sensors 144. In some examples, control circuitry 142 may control the flow rate of first extracted flow W1 based on at least one of a humidity (e.g., a relative humidity), a temperature, and/or a pressure of first exhaust flow F3 and/or second exhaust flow F4.

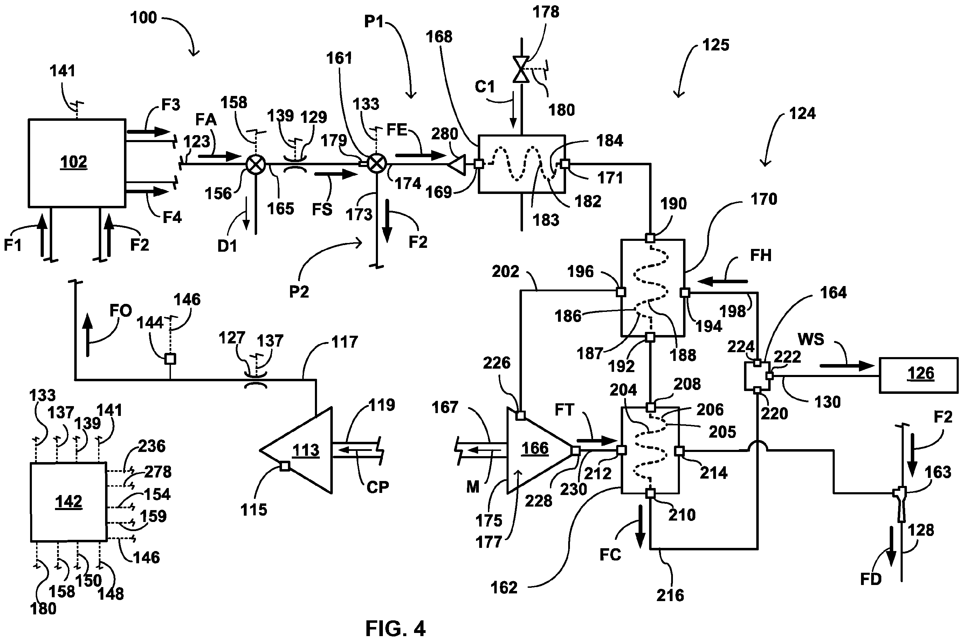

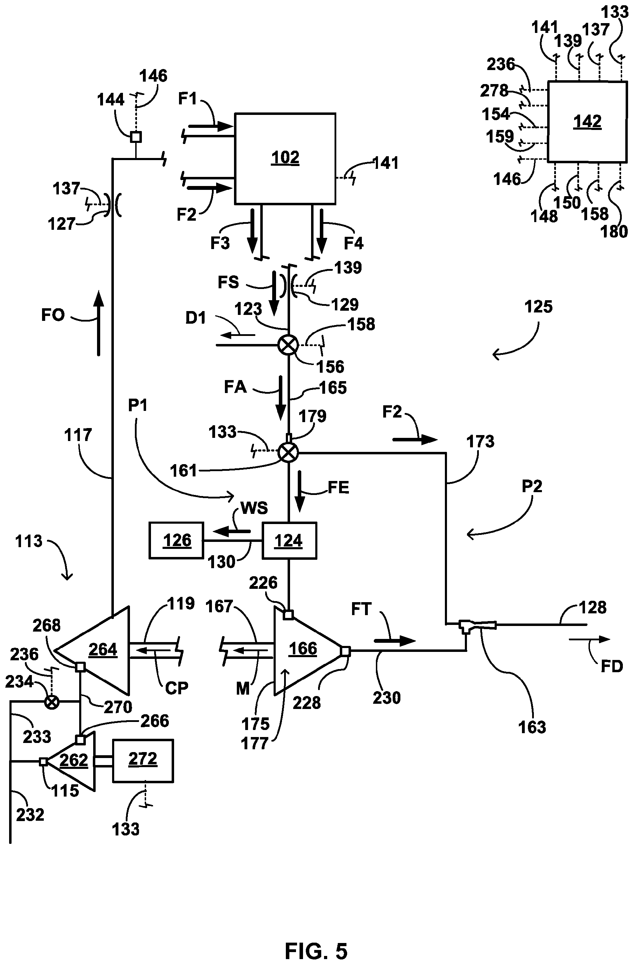

Control circuitry 142 may be configured to control one or more operations of fuel cell system 100 based on an indicative signal from sensor 144, 152, 127, 129, 131, 157, and/or others. For example, control circuitry 142 may be configured to exhaust system 125 to alter and/or control a flow rate of exhaust flow FA based on an indicative signal from sensor 144, 152, 127, 129, 131, 157, and/or others. Control circuitry 142 may be configured to cause water distribution system 126 to control the flow rate of first extracted flow W1 based on based on an indicative signal from sensor 144, 152, 127, 129, 131, 157, and/or others. Further, control circuitry 142 may be configured to control inlet compressor 113, water transfer device 132, flow control device 140, and/or other components of water distribution system 126 based on one or more indicative signals from flow sensor 127, flow sensor 129, flow sensor 131, water transfer device 132, flow control device 140, sensors 144, sensor 152, flow divider 156 (FIG. 2), flow device 161 (FIG. 2), sensor 157, flow control device 178 (FIG. 4), flow control device 234 (FIG. 5), motor 272 (FIG. 5), and/or other sensors and/or components within fuel cell system 100.

As used herein, the term "water" refers to a fluid having a chemical formula H2O which may be in a vapor phase, a liquid phase, or a combination of the liquid phase and the vapor phase. The various components of fuel cell system 100 may be configured to alter the phase from vapor to liquid and vice-versa as fuel cell system 100 operates (e.g., as fuel cell system 100 generates the electric potential between first electrode 109 and second electrode 111). For example, water within first exhaust flow F3 and/or second exhaust flow F4 may be largely in the vapor phase, although liquid may also be present. Exhaust system 125 may be configured to transfer heat from the exhaust flow to cause a portion of the vapor phase to condense into the liquid phase. Hence, water flow WS may be largely in the liquid phase (although vapor may also be present). If water flow WS is provided to an inlet flow of fuel cell system 100, as discussed below, the inlet flow and/or fuel cell system 100 may transfer heat to water flow WS (e.g., when water flow WS is injected in the inlet flow), such that the liquid phase of water flow WS largely vaporizes into the vapor phase.

In the above and in the following examples, although exhaust system 125 may be largely discussed as receiving exhaust flow FA from first exhaust flow F3, exhaust system 125 may be configured to receive exhaust flow from second exhaust flow F4 or both first exhaust flow F3 and second exhaust flow F4 instead of or in addition to receiving and extracting water from first exhaust flow F3. Similarly, in the above and in the following examples, although exhaust system 125 and/or water distribution system 126 may be largely discussed as providing water flow W1 to first feed F1, exhaust system 125 and/or water distribution system 126 may be configured to provide water flow W1 to second feed F2 or both first feed F1 and second feed F2 instead of or in addition to providing water flow W1 to first feed F1.

FIG. 2 is a schematic block diagram of fuel cell system 100 with exhaust system 125 configured to receive exhaust FA from fuel cell assembly 102 (e.g., via pipe 123). As discussed, exhaust FA may comprise at least a portion of first exhaust flow F3 and/or second exhaust flow F4. Fuel cell system 100 is configured to provide an exhaust system flow FS to exhaust system 125. Exhaust system flow FS comprises at least a portion of exhaust FA.

Exhaust system flow FS may comprise substantially all of exhaust FA or an amount less than substantially all of exhaust FA. In examples, fuel cell system 100 is configured to control the portion of exhaust FA comprising exhaust system flow FS. For example, fuel cell system 100 may be configured to provide a first portion of exhaust FA to exhaust system 125 as exhaust system flow FS and discharge a second portion of exhaust FA as a discharge flow D1. In examples, water distribution system 126 includes a flow divider 156 (e.g., a valve) configured to control the flow rate of exhaust system flow FS and/or the flow rate of discharge flow D 1. Exhaust system 125 may be configured to receive exhaust system flow FS via a pipe or other conduit 165 ("pipe 165"). In examples, pipe 165 is fluidically coupled to pipe 123 (e.g., via flow divider 156).

Fuel cell system 100 may be configured to control the relative flow rates of exhaust system flow FS and discharge flow D1 using flow divider 156 . For example, flow divider 156 may be configured to receive exhaust FA and position one or more restricting elements within flow divider 156 to control the flow rate of exhaust system flow FS and/or discharge flow D1. In examples, flow divider 156 is a flow divider valve configured to substantially split exhaust FA into exhaust system flow FS and discharge flow D1. In examples, flow divider 156 is configured to increase the flow rate of exhaust system flow FS while decreasing the flow rate of discharge flow D1, and/or decrease the flow rate of exhaust system flow FS while increasing the flow rate of discharge flow D1. Control circuitry 142 may be configured to communicate with flow divider 156 (e.g., via a communication link 158) to increase, decrease, or hold steady the flow rate of exhaust system flow FS based on, for example, one or more indicative signals from flow sensor 127, flow sensor 129, flow sensor 131, water transfer device 132, flow control device 140, sensors 144, sensor 152, flow divider 156, flow device 161, sensor 157, flow control device 178, flow control device 234, motor 272, and/or other sensors and/or components within fuel cell system 100.

Exhaust system 125 includes a flow device 161, a turbine 166, and an ejector 163. Exhaust system 125 defines first flow path P1 from flow device 161 to ejector 163 and defines second flow path P2 from flow device 161 to ejector 163. Flow device 161 is configured to receive exhaust FA and discharge exhaust flow FE and second flow F2. Flow device 161 may be configured to discharge exhaust flow FE to first flow path P1 and discharge second flow F2 to second flow path P2, such that at least a portion of exhaust flow FE proceeds through turbine 166 via first flow path P1 as second flow F2 substantially avoids turbine 166 via second flow path P2. In examples, flow device 161 includes a flow device inlet 179 configured to receive exhaust FA (e.g., from pipe 165). In examples, flow device 161 is configured to discharge exhaust flow FE to a pipe or other conduit 174 ("pipe 174") and/or discharge second flow F2 to a pipe or other conduit 173 ("pipe 173"). Turbine 166 may be configured to receive at least a portion of exhaust flow FE from flow device 161 via pipe 174. Ejector 163 may be configured to receive at least a portion of second flow F2 from flow device 161 via pipe 173.

As discussed, the respective flow rates of exhaust flow FE through first flow path P1 and second flow F2 through second flow path P2 may act to generate a backpressure (e.g., a pressure at flow device inlet 179) on exhaust system flow FS and/or exhaust flow FA. Alterations to the respective flow rates of exhaust flow FE through first flow path P1 and second flow F2 (e.g., by flow device 161) may alter the backpressure, causing an alteration to the flow rate of exhaust system flow FS and/or exhaust flow FA. For example, exhaust system 125 may be configured such that a flow rate of exhaust flow FE through first flow path P1 generates a first pressure drop from flow device inlet 179 to exhaust discharge 128. Exhaust system 125 may be configured such that a flow rate of second flow F2 through second flow path P2 generates a second pressure drop from flow device inlet 179 to exhaust discharge 128. First flow path P1 and second flow path P2 may be substantially parallel flow paths, such that the first pressure drop caused by exhaust flow FE is substantially equal to the second pressure drop generated by second flow F2. Hence, for a given position of flow device 161 (e.g., with flow device 161 in a first position), the flow rate of exhaust flow FE and the flow rate of second flow F2 may substantially adjust such that the first pressure drop (caused by the flow rate of exhaust flow FE) is substantially equal to the second pressure drop (caused by the flow rate of second flow F2). The first pressure drop and the second pressure drop may substantially determine the backpressure on exhaust system flow FS and/or exhaust flow FA.

Altering a position of flow device 161 from the first position to a second position different from the first position may cause an alteration of the relative flow rates of exhaust flow FE and second flow F2. With flow device 161 in the second position, the altered flow rate of exhaust flow FE through first flow path P1 may generate a third pressure drop from flow device inlet 179 to exhaust discharge 128 different from the first pressure drop and the second pressure drop. The altered flow rate of second flow F2 through second flow path P2 may generate a fourth pressure drop from flow device inlet 179 to exhaust discharge 128 different from the first pressure drop and the second pressure drop. Correspondingly, with flow device 161 in the second position, the flow rates of exhaust flow FE and second flow F2 may adjust such that the third pressure drop (caused by the altered flow rate of exhaust flow FE) is substantially equal to the fourth pressure drop (caused by the altered flow rate of second flow F2). The third pressure drop and the fourth pressure drop may now substantially determine the backpressure on exhaust system flow FS and/or exhaust flow FA. Hence, altering the respective flow rates of exhaust flow FE through first flow path P1 and second flow F2 through second flow path P2 (e.g., using flow device 161) may alter the backpressure on exhaust system flow FS and/or exhaust flow FA, causing an alteration in the flow rate of a system flow entering, discharging, and/or passing through fuel cell assembly 102 (e.g., one or more of first feed F1, second feed F2, first exhaust F3, second exhaust F4, and/or a flow in fluidic communication with first side 108 or second side 110 of fuel cell assembly 102).

In examples, exhaust system 125 may be configured such that first flow path P1 (which includes turbine 166) defines a first flow resistance from flow device 161 to exhaust discharge 128, and second flow path P2 (which substantially bypasses turbine 166) defines a second flow resistance from flow device 161 to exhaust discharge 128. The first flow resistance may differ from the second flow resistance. In examples, the first flow resistance is greater than the second flow resistance. The flow rate of exhaust flow FE may be dependent on the first flow resistance of first flow path P1, and/or the flow rate of second flow F2 may be dependent on the second flow resistance of second flow path P2. In examples, the flow rate of exhaust flow FE is substantially equal to a flow rate of exhaust flow FE required to overcome the first flow resistance such that a pressure drop from flow device inlet 179 to exhaust discharge 128 through first flow path P1 is substantially equivalent to a pressure drop from flow device inlet 179 to exhaust discharge 128 caused by second flow F2 (e.g., via second flow path P2). The flow rate of second flow F2 may be substantially equal to a flow rate of second flow F2 required to overcome the second flow resistance such that a pressure drop from flow device inlet 179 to exhaust discharge 128 through second flow path P2 is substantially equivalent to a pressure drop from flow device inlet 179 to exhaust discharge 128 caused by exhaust flow FE (e.g., via first flow path P1). In examples, the first resistance of first flow path P1 includes a flow resistance caused by at least turbine 166.

Control circuitry 142 may be configured to alter and/or control the respective flow rates of exhaust flow FE and second flow F2 using flow device 161. Control circuitry 142 may be configured to cause flow device 161 to alter and/or control exhaust flow FE and second flow F2 in response to one or more operating conditions of fuel cell assembly 102. Control circuitry 142 may be configured to cause flow device 161 to alter and/or control exhaust flow FE and second flow F2 in response to a signal indicative of a system flow entering, discharging, and/or passing through fuel cell assembly 102, such as an indicative signal from flow sensor 127, flow sensor 129, flow sensor 131, and/or other sensors and/or components within fuel cell system 100. In examples, control circuitry 142 is configured to determine a flow threshold for a system flow entering, discharging, and/or passing through fuel cell assembly 102 (e.g., a flow threshold based on a power sensed by sensor 152 or another operating parameter of fuel cell assembly 102). Control circuitry 142 may be configured to compare the system flow to the flow threshold and cause flow device 161 to alter and/or control exhaust flow FE and second flow F2 in response to a difference between the system flow and the flow threshold. In examples, control circuitry 142 is configured to monitor a system flow within fuel cell system 100 (e.g., using sensor 127, sensor 129, sensor 131, and/or others) and cause flow device 161 to control and/or alter exhaust flow FE and second flow F2 to substantially maintain the system flow at a particular value and/or within a range of values.

In examples, turbine 166 includes a turbine inlet 226 configured to receive at least some portion of exhaust flow FE. Turbine 166 may include a turbine outlet 228 configured to discharge a turbine exhaust FT comprising at least some portion of (e.g., substantially all) of exhaust flow FE. In examples, exhaust system 125 is configured such that first flow path P1 includes at least turbine inlet 226 and turbine outlet 228. Exhaust system 125 may be configured such that second flow path P2 substantially avoids turbine inlet 226 and turbine outlet 228. In examples, turbine 166 is configured to discharge turbine exhaust FT (e.g., via turbine outlet 228) to a pipe or other conduit 230 ("pipe 230").

Turbine 166 may be configured to receive at least some portion of exhaust flow FE and cause an expansion of the portion of exhaust flow FE within turbine 166 to, for example, extract thermal energy and/or kinetic energy from the portion of exhaust flow FE. In examples, turbine 166 includes a turbine casing 175 defining an inner volume 177 configured to substantially contain the portion of exhaust flow FE as turbine 166 causes the expansion. In examples, inner volume 177 is configured to substantially channel the portion of exhaust flow FE from turbine inlet 226 to turbine outlet 228 as turbine 166 causes the expansion of the portion of exhaust flow FE. Turbine 166 may be configured to cause a rotation of a turbine shaft (e.g., turbine shaft 167 and/or another shaft of turbine 166) as turbine 166 expands the portion of exhaust flow FE.

Turbine 166 may be configured to extract energy from the portion of exhaust flow FE to generate power (e.g., turbine power M). In examples, turbine 166 includes a plurality of turbine blades (not shown) within inner volume 177. The plurality of turbine blades may be configured to extract the thermal energy and/or kinetic energy from the portion of exhaust flow FE (e.g., as the portion of exhaust flow proceeds from turbine inlet 226 to turbine outlet 228). For example, turbine 166 may be configured such that a flow impingement of the portion of exhaust flow FE on the plurality of turbine blades causes turbine 166 to extract thermal energy and/or kinetic energy from the portion of exhaust flow FE. In examples, the plurality of turbine blades comprises a plurality of moving blades configured to move relative to turbine casing 175. The plurality of moving blades may be configured to cause the rotation of turbine shaft 167 and/or another shaft of turbine 166 as turbine 166 expands the portion of exhaust flow FE. Turbine 166 may be configured to transfer turbine power M via turbine shaft 167.

Turbine 166 may be configured such that turbine exhaust FT exits turbine 166 (e.g., via turbine outlet 228) at a reduced pressure and/or temperature relative to the portion of exhaust flow FE entering turbine 166 (e.g., via turbine inlet 226) when turbine 166 causes the expansion of the portion of exhaust flow FE. Hence, turbine 166 may generate a differential pressure from turbine inlet 226 to turbine outlet 228 as the portion of exhaust stream FE flows through inner volume 177. In examples, turbine 166 is configured such that the portion of exhaust stream FE defines a pressure gradient from turbine inlet 226 to turbine outlet 228 as the portion of exhaust stream FE flows through inner volume 177.

For example, the portion of exhaust stream FE may define the pressure gradient from a turbine inlet pressure at turbine inlet 226 to a turbine outlet pressure at turbine outlet 228. The turbine inlet pressure may be greater than the turbine outlet pressure. Turbine 166 may be configured such that turbine power M is dependent on the differential pressure from turbine inlet 226 to turbine outlet 228. For example, turbine 166 may be configured such that turbine power M increases when the differential pressure from turbine inlet 226 to turbine outlet 228 increases, and/or turbine power M decreases when the differential pressure from turbine inlet 226 to turbine outlet 228 decreases.

Ejector 163 is configured to receive both turbine exhaust FT from turbine 166 and second flow F2 from flow device 161. Ejector 163 is configured to generate a suction on turbine exhaust FT using second flow F2. In examples, ejector 163 is configured to generate a low pressure region LP using second flow F2 and fluidically couple the low pressure region LP to turbine exhaust FT. Ejector 163 is configured such that altering a pressure of the low pressure region LP alters a differential pressure through turbine 166 (e.g., a differential pressure from turbine inlet 226 to turbine outlet 228). For example, ejector 163 may be fluidically coupled to turbine outlet 228 and inner volume 177 of turbine 166. In examples, ejector 163 is configured such that an alteration in second flow F2 alters the pressure of the low pressure region LP. Hence, exhaust system 125 may be configured such that the differential pressure through turbine 166 is dependent on a mass flow rate of second flow F2. The dependance of the differential pressure on second flow F2 may at least partially compensate for a reduction in exhaust flow FE that may occur when flow device 161 acts to increase second flow F2.

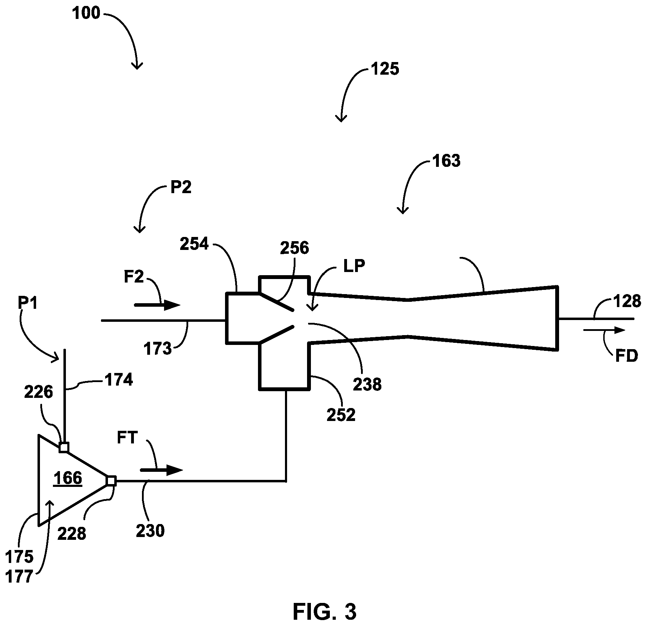

As an example, FIG. 3 depicts a schematic illustration of an ejector 163 receiving turbine exhaust FT and second flow F2. Ejector 163 may include a first ejector inlet 252 configured to receive turbine exhaust FT (e.g., via pipe 230). Ejector 163 may include a second ejector inlet 254 configured to receive second flow F2 (e.g., via pipe 173). In examples, exhaust system 125 is configured such that ejector 163 uses second flow F2 as a motive flow. For example, ejector 163 may be configured to substantially accelerate second flow F2 (e.g., using a nozzle 256 of the ejector) to generate a low pressure region LP within a suction chamber 258 defined by ejector 163. Ejector 163 may be configured such that a pressure of low pressure region LP is dependent on a flow rate of second flow F2 entering ejector 163 and accelerating through nozzle 256. For example, an increase in the flow rate of second flow F2 may decrease the pressure in low pressure region LP. A decrease in the flow rate of second flow F2 may increase the pressure in low pressure region LP. Ejector 163 may includes a diffuser section 260 configured to discharge second flow F2 and turbine exhaust FT as discharge flow FD (e.g., via exhaust discharge 128).

In examples, exhaust system 125 is configured to fluidically couple inner volume 177 of turbine 166 and suction chamber 258. For example, ejector 163 may be configured such that turbine exhaust FT discharges from inner volume 177 via turbine outlet 228 and flows into suction chamber 258. In examples, exhaust system 125 is configured such that turbine exhaust FT defines a pressure gradient from turbine outlet 228 to suction chamber 258 as turbine exhaust FT flows from turbine outlet 228 (e.g., via pipe 230) into suction chamber 258.

Exhaust system 125 may be configured such that an alteration in the pressure of low pressure area LP causes an alteration of a pressure of turbine exhaust FT at turbine outlet 228 (and, e.g., within at least some portion of inner volume 177). For example, exhaust system 125 may be configured such that an increase in the pressure of suction chamber 258 (caused by, for example, a decrease in the flow rate of second flow F2) causes an increase in the pressure of turbine exhaust FT at turbine outlet 228. Exhaust system 125 may be configured such that a decrease in the pressure of suction chamber 258 (caused by, for example, an increase in the flow rate of second flow F2) causes a decrease in the pressure of turbine exhaust FT at turbine outlet 228. Hence, exhaust system 125 may be configured such that a differential pressure from turbine inlet 226 to turbine outlet 228 is at least partially dependent on a flow rate of second flow F2 provided to ejector 163.

In some examples, exhaust system 125 is configured to receive a cathode exhaust of fuel cell assembly 102, such that exhaust FA and/or exhaust system flow FS comprises at least a portion of the cathode exhaust. Control circuitry 142 may be configured to cause flow device 161 to alter a flow rate of second flow F2 and/or exhaust flow FE based on a signal indicative of a flow rate of a system flow entering, discharging, and/or passing through fuel cell assembly 102, such as a flow rate of an oxidizing agent entering fuel cell assembly 102, a flow rate of the cathode exhaust discharging from fuel cell assembly 102, and/or a flow rate of a flow in fluidic communication with a cathode side (e.g., first side 108) of fuel cell assembly 102.

In some examples, exhaust system 125 is configured to receive an anode exhaust of fuel cell assembly 102, such that exhaust FA and/or exhaust system flow FS comprises at least a portion of the anode exhaust. Control circuitry 142 may be configured to cause flow device 161 to alter a flow rate of second flow F2 and/or exhaust flow FE based on a signal indicative of a system flow such as, for example, a flow rate of a fuel entering fuel cell assembly 102, a flow rate of the anode exhaust discharging from fuel cell assembly 102, and/or a flow rate of a flow in fluidic communication with an anode side (e.g., second side 110) of fuel cell assembly 102.

In examples, control circuitry 142 is configured to compare the flow rate indicated by the indicative signal with a flow threshold for the system flow and cause flow device 161 to alter a flow rate of second flow F2 and/or exhaust flow FE based on the comparison. In some examples, control circuitry 142 is configured to define the flow threshold. For example, control circuitry 142 may define the flow threshold based on an operating parameter of fuel cell assembly 102, such as a power provided by and/or demanded from fuel cell assembly 102, a pressure and/or temperature of a flow entering, discharging, and/or passing through fuel cell assembly 102, and/or another operating parameter.

In some examples, turbine shaft 167 is a single shaft configured to transfer turbine power M. In some examples, turbine shaft 167 includes a plurality of turbine shafts configured to transfer turbine power M. For example, turbine shaft 167 may include a first turbine shaft and a second turbine shaft. In examples, turbine 166 includes a low pressure turbine (e.g., a low pressure section of turbine 166) configured to drive the first turbine shaft and/or a high pressure turbine (e.g., a high pressure section of turbine 166) configured to drive the second turbine shaft. In examples, the high pressure turbine is configured to transfer a first portion of mechanical power M using the first turbine shaft and the low pressure turbine is configured to transfer a second portion of mechanical power M using the second turbine shaft. In some examples, turbine shaft 167 is a twin-spool shaft configured such that an outer turbine shaft (e.g., one of the first turbine shaft or the second turbine shaft) may rotate about an inner turbine shaft (e.g., the other of the first turbine shaft or the second turbine shaft) and about a longitudinal axis as the inner turbine shaft rotates about the longitudinal axis.

As discussed, turbine 166 may be configured to provide at least a portion of compressor power CP. For example, water extraction system 124 may be configured to convert at least some portion of mechanical power M into compressor power CP. In examples, turbine 166 (e.g., turbine shaft 167) is configured to cause and/or impart a torque on compressor shaft 119 such that compressor shaft 119 experiences a rotary torque. For example, turbine shaft 167 may be coupled (e.g., mechanically coupled) to compressor shaft 119, such that turbine shaft 167 transfers at least a portion of mechanical power M to compressor shaft 119.

In some examples, turbine shaft 167 and compressor shaft 119 comprise a common shaft (e.g., a unitary shaft which defines turbine shaft 167 and compressor shaft 119). In some examples, when turbine 166 includes the first turbine shaft and the second turbine shaft, turbine 166 may be configured to transfer mechanical power MP to exhaust compressor 160 using one of the first turbine shaft or the second turbine shaft and transfer additional mechanical power (e.g., to other portions of fuel cell system 100 and/or to other loads) using the other of the first turbine shaft or the turbine second shaft. In some examples, turbine shaft 167 is configured to transfer mechanical power MP to exhaust compressor 160 using the first turbine shaft and the second turbine shaft. For example, turbine shaft 167 may be configured to transfer a first portion of mechanical power M to the low pressure compressor of exhaust compressor 160 using the first turbine shaft. Turbine shaft 167 may be configured to transfer a second portion of mechanical power M to the high pressure compressor of exhaust compressor 160 using the second turbine shaft.

Thus, exhaust system 125 may be configured to alter a flow rate of one or more flows entering, discharging, and/or passing through fuel cell assembly 102 by using flow device 161 to control and/or alter a flow rate of exhaust flow FE and second flow F2. Exhaust system 125 may be configured such that a differential pressure across turbine 166 (e.g., from turbine inlet 226 to turbine outlet 228) is dependent on a mass flow rate of second flow F2. The dependance of the differential pressure on second flow F2 may at least partially compensate for a reduction in exhaust flow FE that may occur when flow device 161 acts to increase second flow F2. In some examples, exhaust system 125 includes water distribution system 126 and/or a water extraction system 124, although this is not required.

FIG. 4 is a schematic block diagram of exhaust system 125 including a water extraction system 124 configured to extract water from exhaust flow FE. Exhaust system 125 may be configured to provide at least some portion of the water extracted by water extraction system 124 to water distribution system 126.

Water extraction system 124 includes at least a condenser 162, an extractor 164, and turbine 166. In examples, water extraction system 124 includes an intercooler 168 and/or a reheater 170. Pipe 174 may be configured to convey exhaust flow FE to and/or through intercooler 168, reheater 170, and/or condenser 162. Condenser 162 is configured to receive exhaust flow FE (via intercooler 168 and/or reheater 170 in some examples) and transfer heat from exhaust flow FE, causing some portion of water in a vapor phase within exhaust flow FE to condense to a liquid phase (e.g., condensate). Water extraction system 124 may be configured such that turbine exhaust FT from turbine 166 flows within and/or through condenser 162 and serves as a coolant (e.g., a secondary fluid) for condenser 162.

Condenser 162 is configured to transfer the heat from exhaust flow FE to turbine exhaust FT to cause the condensation of vapor phase within exhaust flow FE to the liquid phase. Condenser 162 is configured to discharge a cooled exhaust flow FC and provide the turbine exhaust to ejector 163 (e.g., to first ejector inlet 252). Cooled exhaust flow FC comprises at least some portion (e.g., substantially all) of exhaust flow FA. Fuel cell system 100 may be configured such that when turbine 166 provides turbine exhaust FT to condenser 162, cooled exhaust flow FC has a reduced temperature and/or pressure relative to exhaust flow FE entering the condenser, and/or has an increased fraction of liquid phase relative to the exhaust flow entering the condenser.

Condenser 162 is configured to discharge cooled exhaust flow FC to extractor 164. Extractor 164 is configured to substantially separate the liquid phase and the vapor phase within cooled exhaust flow FC. In examples, extractor 164 is configured to discharge at least some portion of the liquid phase as water flow WS and/or discharge a dehumidified exhaust flow FH, where dehumidified exhaust flow FH substantially comprises cooled exhaust flow FC less water flow WS. Hence, dehumidified exhaust flow FH comprises at least some portion of exhaust flow FA.

Turbine 166 is configured to receive dehumidified exhaust flow FH (via reheater 170 in some examples) and extract energy from dehumidified exhaust flow FH to generate power (e.g., turbine power M). Thus, when turbine 166 receives dehumidified exhaust stream FH, turbine 166 receives at least some portion of exhaust stream FE. Turbine 166 may be configured to cause an expansion of dehumidified exhaust flow FH within turbine 166, resulting in turbine exhaust FT exiting turbine 166 at a reduced temperature and/or pressure relative to dehumidified exhaust flow FH entering turbine 166, and relative to exhaust flow FE entering condenser 162. Hence, water extraction system 124 may be configured to utilize turbine exhaust FT to transfer heat from exhaust flow FE within condenser 162 to cause the condensation of water vapor within exhaust flow FE to a liquid phase. Thus may avoid and/or reduce the operational need for a separate coolant system to provide a coolant to condenser 162. Water extraction system 124 may be configured to discharge turbine exhaust FT as discharge flow FD (e.g., turbine exhaust FT may comprise at least some portion of discharge flow FD).

Water extraction system 124 may be configured to substantially conserve (e.g., retain) some portion of the heat rejected by exhaust flow FE as water extraction system 124 extracts water flow WS. In examples, water extraction system 124 may be configured to cause exhaust flow FE to transfer heat to one or more flows and/or components of water extraction system 124, with the one or more flows and/or components configured to increase an inlet temperature and/or inlet pressure of turbine 166 as a result of the heat transfer. The increase in the inlet temperature and/or inlet pressure of turbine 166 may increase turbine power M, increasing the power that fuel cell system 100 may distribute to other loads within fuel cell system 100 and/or transmit to other loads outside of fuel cell system 100.

For example, water extraction system 124 may include reheater 170. Reheater 170 may be configured to transfer heat to one or more flows and/or components of water extraction system 124. In examples, reheater 170 is configured to transfer heat from exhaust flow FE to dehumidified exhaust flow FH. In examples, reheater 170 is configured to transfer heat from exhaust flow FE prior to condenser 162 receiving exhaust flow FE. The transfer of heat to dehumidified exhaust flow FH may increase an inlet temperature and/or inlet pressure of turbine 166. In some examples, the transfer of heat to dehumidified exhaust flow FH (e.g., from exhaust flow FE) may increase a quality (e.g., a fraction of total mass in the vapor phase) of dehumidified exhaust flow FH. For example, the transfer of heat to dehumidified exhaust flow FH enabled by reheater 170 may cause some portion of a liquid phase incidentally or intentionally discharged by extractor 164 to transition to the vapor phase prior to dehumidified exhaust flow FH entering turbine 166. The increase in the quality may limit potential damage to the blades and/or other components of turbine 166 that might result in the absence of reheater 170.

Water extraction system 124 may include intercooler 168 configured to transfer heat to one or more flows and/or components of water extraction system 124. In examples, intercooler 168 may be configured to cause a heat transfer from exhaust flow FE. In examples, intercooler 168 is configured to cause the heat transfer from exhaust flow FE in addition to the heat transfer from exhaust flow FE caused by reheater 170 and/or condenser 162. Control circuitry 142 may be configured to control and/or adjust the heat transfer (e.g., control and/or adjust an amount of heat transferred) from exhaust flow FE caused by intercooler 168. For example, fuel cell system 100 may be configured to control and/or adjust the heat transfer from exhaust flow FE caused by intercooler 168 based on one or more operating conditions of reheater 170, condenser 162, turbine 166, and/or other components and/or portions of fuel cell system 100.

In some examples, intercooler 168 is configured to receive a cooling fluid C1. Intercooler 168 may be configured to cause a heat transfer from exhaust flow FE to cooling fluid C1. In examples, control circuitry 142 is configured to control a flow rate of cooling fluid C1 to, for example, control and/or adjust the heat transfer from exhaust flow FE caused by intercooler 168. For example, Water extraction system 124 may include a flow control device 178 (e.g., a pump and/or valve) configured to control the flow rate of cooling fluid C1. Control circuitry 142 may be configured to communicate with flow control device 178 (e.g., via a communication link 180) to control the flow rate of cooling fluid C1. In some examples, water extraction system 124 is configured such that cooling fluid C1 comprises at least some portion of turbine exhaust flow FT. For example, exhaust discharge 128 may be configured to supply turbine exhaust FT to intercooler 168 (e.g., via flow control device 178). Intercooler 168 may be configured to cause a heat transfer from exhaust flow FE to turbine exhaust FT. In examples, intercooler 168 is configured to cause a heat transfer from exhaust flow FE to cooling fluid C1, and condenser 162 and/or reheater 170 are configured to cause a another heat transfer from exhaust flow FE. Fuel cell system 100 may be configured such that the heat transfer of condenser 162 and/or reheater 170 is subsequent to the heat transfer of intercooler 168.

Although intercooler 168, reheater 170, and/or condenser 162 are depicted in FIG. 4 as downstream of flow device 161, such that intercooler 168, reheater 170, and/or condenser 162 transfer heat from exhaust stream FE, in some examples, one or more of intercooler 168, reheater 170, and/or condenser 162 may be upstream of flow device 161, such that one or more of intercooler 168, reheater 170, and/or condenser 162 transfer heat from exhaust system flow FS.

Hence, water extraction system 124 may be configured to receive exhaust flow FE from fuel cell assembly 102 and transfer heat from exhaust flow FE to cause condensation of a vapor phase within exhaust flow FE. In examples, water extraction system 124 is configured to cause a first heat transfer from exhaust flow FE to cooling fluid C1 (e.g., turbine exhaust FT) using intercooler 168. Water extraction system 124 may be configured to cause a second heat transfer from exhaust flow FE to dehumidified exhaust flow FH using reheater 170 subsequent to the first heat transfer of intercooler 168. Water extraction system 124 may be configured to cause a third heat transfer from exhaust flow FE to turbine exhaust FT using condenser 162 subsequent to the second heat transfer of reheater 170. Extractor 164 may be configured to receive cooled exhaust flow FC from condenser 162 and separate cooled exhaust flow FC into water flow WS and dehumidified exhaust flow FH. Extractor 164 may be configured to provide dehumidified exhaust flow FH to reheater 170, such that reheater 170 may cause the second heat transfer prior to turbine 166 receiving dehumidified exhaust flow FH. Water extraction system 124 may be configured to provide turbine exhaust FT to condenser 162 and/or intercooler 168, such that condenser 162 may cause the third heat transfer and/or intercooler 168 may cause the first heat transfer.

FIG. 5 is a schematic illustration of fuel cell system 100 configured to compress inlet feed FO using a first compression and a second compression. For example, as depicted in figure 5, inlet compressor 113 may include at least a first compressor 262 configured to conduct the first compression and a second compressor 264 configured to conduct the second compression. First compressor 262 may be configured to receive inlet feed FO (e.g., via compressor inlet 115) at the initial feed pressure and discharge the inlet feed FO at an intermediate feed pressure greater than the initial feed pressure. Second compressor 264 may be configured to receive the inlet feed FO substantially at the intermediate feed pressure and discharge the inlet feed FO (e.g., to pipe 117) at the discharge feed pressure, where the discharge feed pressure is greater than the intermediate feed pressure.

In examples, first compressor 262 is configured to receive inlet feed FO via a pipe or other conduit 232 ("pipe 232") configured to convey inlet feed FO to compressor inlet 115. First compressor 262 may be configured to discharge inlet feed FO via a first compressor outlet 266. Second compressor 264 may be configured to receive inlet feed FO at a second compressor inlet 268. In examples, first compressor 262 is configured to discharge inlet feed FO (e.g., via first compressor outlet 266) to a pipe or conduit 270 ("pipe 270") configured to convey inlet feed FO. Second compressor 264 may be configured to receive inlet feed FO via pipe 270.

In some examples, first compressor 262 is a motor-driven compressor configured to conduct the first compression using a first compressor power provided by a motor 272. In examples, motor 272 is configured to provide the first compressor power using electrical power received from fuel cell assembly 102. Second compressor 264 may be a shaft-driven compressor including compressor shaft 119. Second compressor 264 may receive compressor power CP from turbine 166, as discussed. First compressor 262 may be a rotary compressor including a first impellor configured to compress a fluid (e.g., inlet flow FO) when the first impellor rotates in response to a first rotary torque (e.g., provided by motor 272) on the first impellor. Second compressor 264 may be a rotary compressor including a second impellor configured to compress a fluid (e.g., inlet flow FO) when the second impellor rotates in response to a second rotary torque (e.g., on compressor shaft 119 provided by, for example, turbine 166) on the first impellor.

Control circuitry 142 may be configured to control the operation of first compressor 262 to increase, decrease, or substantially hold steady the first compression provided by first compressor 262. For example, control circuitry 142 may be configured to control first compressor 262 to increase, decrease, or substantially hold steady the intermediate feed pressure of inlet feed FO discharged by first compressor 262. In examples, control circuitry 142 is configured to control motor 272 (e.g., a speed of motor 272) to increase, decrease, or substantially hold steady the intermediate feed pressure. For example, control circuitry 142 may be configured to communicate with motor 272 via a communication link 278 to control motor 272.

Control circuitry 142 is configured to control the first compression of first compressor 262 to control a pressure of inlet feed FO entering fuel cell assembly 102 (e.g., a pressure of inlet feed within pipe 117). Control circuitry 142 may be configured to control first compressor 262 to, for example, compensate for variations in the second compression caused by second compressor 264 (due to, e.g., variations in the turbine power M transferred from turbine 166 to second compressor 264). For example, when the power demanded from fuel cell assembly 102 increases, this may temporarily cause

In examples, control circuitry 142 may be configured to control first compressor 262 based on a signal provided by sensors 144 (FIG. 1) and indicative of a pressure of inlet feed FO. Control circuitry 142 may be configured to control first compressor 262 to, for example, compensate for variations in the second compression caused by second compressor 264 (due to, e.g., variations in the turbine power M transferred from turbine 166 to second compressor 264). For example, in some conditions, such as during and/or shortly following a change in the power demanded from fuel cell assembly 102, the turbine power M provided by turbine 166 to second compressor 264 may vary (e.g., due to changes in pressure, temperature, and/or enthalpy of exhaust FA), Variations in the turbine power M provided may cause variation in the second compression of second compressor 264. The variation in the second compression may cause a variation in the discharge feed pressure of inlet feed FO provided to fuel cell assembly 102 (e.g., via pipe 117).

Control circuitry 142 may be configured to substantially compensate for the variation in the second compression of second compressor 264 by altering the first compression of first compressor 262. For example, in response to a decrease in the pressure of inlet feed FO provided to fuel cell assembly 102 (e.g., as indicated by sensors 144), control circuitry 142 may be configured to increase the first compression of first compressor 262. In response to an increase in the pressure of inlet feed FO provided to fuel cell assembly 102 (e.g., as indicated by sensors 144), control circuitry 142 may be configured to decrease the first compression of first compressor 262.

In some examples, fuel cell system 100 includes a compressor bypass 233 configured to direct (e.g., to shunt) at least some portion of inlet feed FO following the first compression or the second compression to compressor inlet and/or pipe 117. In examples, control circuitry 142 is configured to control a flow rate of inlet feed FO through compressor bypass 233 using a flow control device 234 (e.g., a valve). Control circuitry 142 may be configured to communicate with flow control device 234 (e.g., via a communication link 236) to increase, decrease, or hold steady the flow rate of inlet feed FO through compressor bypass 233 based on, for example, one or more indicative signals from flow sensor 127, flow sensor 129, flow sensor 131, water transfer device 132, flow control device 140, sensors 144, sensor 152, flow divider 156 (FIG. 2), flow device 161 (FIG. 2), sensor 157, flow control device 178 (FIG. 4), flow control device 234 (FIG. 5), motor 272 FIG. 5), and/or other sensors and/or components within fuel cell system 100.

In some examples, fuel cell system 100 may include an inlet feed intercooler (not shown) configured to transfer heat from the inlet FO following the first compression or the second compression. In some examples, the inlet feed intercooler is configured to transfer heat from inlet feed FO following the first compression of first compressor 262 and prior to the second compression of second compressor 264. In some example, the inlet feed intercooler may be configured to transfer heat from inlet feed FO following the second compression of second compressor 264.

Referring primarily to FIG. 4, intercooler 168 may be configured to substantially prevent mixing of exhaust flow FE and cooling fluid C1. In examples, intercooler 168 is configured to transfer heat from exhaust flow FE to cooling fluid C1 through a solid wall 183 (e.g., a pipe wall and/or plate) of intercooler 168 as exhaust flow FE fluidically communicates with (e.g., is in contact with) a first side 182 of solid wall 183 and cooling fluid C1 fluidically communicates with (e.g., is in contact with) a second side 184 of solid wall 183. Second side 184 may be separated from first side 182 by a body of solid wall 183. Intercooler 168 may be, for example, a double-pipe heat exchanger, a counter flow heat exchanger, a shell-and-tube heat exchanger, a plate heat exchanger, or some other type of heat exchanger configured to cause a heat transfer from exhaust flow FE to cooling fluid C1.

In examples, intercooler 168 includes an intercooler inlet 169 and an intercooler outlet 171 in fluidic communication with intercooler inlet 169. Water extraction system 124 may be configured such that intercooler inlet 169 receives exhaust flow FE at a first temperature and intercooler outlet 169 discharges exhaust flow FE at a second temperature less than the first temperature (e.g., when intercooler 168 receives cooling fluid C1). In examples, intercooler inlet 169 is configured to receive exhaust flow FE from exhaust compressor 160 (e.g., via a first portion of pipe 174). Intercooler outlet 171 may be configured to discharge exhaust flow FE to reheater 170 (e.g., via a second portion of pipe 174).

Reheater 170 may be configured to substantially prevent mixing of exhaust flow FE and dehumidified exhaust flow FH. In examples, reheater 170 is configured to transfer heat from exhaust flow FE to dehumidified exhaust flow FH through a solid wall 187 (e.g., a pipe wall and/or plate) of reheater 170 as exhaust flow FE fluidically communicates with (e.g., is in contact with) a first side 186 of solid wall 187 and dehumidified exhaust flow FH fluidically communicates with (e.g., is in contact with) a second side 188 of solid wall 187. Second side 188 may be separated from first side 186 by a body of solid wall 187. Reheater 170 may be, for example, a double-pipe heat exchanger, a counter flow heat exchanger, a shell-and-tube heat exchanger, a plate heat exchanger, or some other type of heat exchanger configured to cause a heat transfer from exhaust flow FE to dehumidified exhaust flow FH.

In examples, reheater 170 includes a reheater primary inlet 190 and an reheater primary outlet 192 in fluidic communication with reheater primary inlet 190. Water extraction system 124 may be configured such that reheater primary inlet 190 receives exhaust flow FE at a first reheater temperature and reheater primary outlet 192 discharges exhaust flow FE at a second reheater temperature less than the first reheater temperature (e.g., when reheater 170 receives dehumidified exhaust flow FH and/or another secondary fluid). In examples, reheater primary inlet 190 is configured to receive exhaust flow FE from intercooler 168 (e.g., via the second portion of pipe 174). Reheater primary outlet 192 may be configured to discharge exhaust flow FE to condenser 162 (e.g., via a third portion of pipe 174).

In examples, reheater 170 includes a reheater secondary inlet 194 and an reheater secondary outlet 196 in fluidic communication with reheater secondary inlet 194. Reheater 170 may be configured to receive a secondary fluid (e.g., dehumidified exhaust flow FH) via reheater secondary inlet 194. Reheater 170 may be configured to discharge the secondary fluid via reheater secondary outlet 196. Water extraction system 124 may be configured such that reheater secondary inlet 194 receives the secondary fluid (e.g., dehumidified exhaust flow FH) at a third reheater temperature and reheater secondary outlet 196 discharges the secondary fluid (e.g., dehumidified exhaust flow FH) at a fourth reheater temperature greater than the third reheater temperature (e.g., when reheater 170 receives dehumidified exhaust flow FH and/or another secondary fluid).

In examples, reheater secondary inlet 194 is configured to receive dehumidified exhaust flow FH from extractor 164. For example, reheater secondary inlet 194 may be configured to receive dehumidified exhaust flow FH from extractor 164 via a pipe or other conduit 198 ("pipe 198") configured to convey dehumidified exhaust flow FH to reheater secondary inlet 194. Reheater secondary outlet 196 may be configured to discharge dehumidified exhaust flow FH to turbine 166. In examples, reheater secondary outlet 196 is configured to discharge dehumidified exhaust flow FH to turbine 166 via a pipe or other conduit 202 ("pipe 202") configured to convey dehumidified exhaust flow FH to turbine 166.

Condenser 162 may be configured to absorb heat caused by the condensation of water from exhaust flow FE and/or provide other cooling to exhaust flow FE. Condenser 162 may be configured to transfer heat from exhaust flow FE to a cooling fluid. In examples, turbine exhaust FT comprises the cooling fluid. In some examples, condenser 162 is a surface condenser configured to cause condensation of water from exhaust flow FE on a surface of condenser 162 (e.g., a surface of a heat transfer tube). In examples, condenser 162 is configured to transfer heat from exhaust flow FE to the cooling fluid through a solid wall 205 (e.g., a pipe wall, plate, and/or baffle) of condenser 162 as exhaust flow FE fluidically communicates with (e.g., is in contact with) a first side 204 of solid wall 205 and the coolant fluid fluidically communicates with (e.g., is in contact with) a second side 206 of solid wall 205. Condenser 162 may be configured to substantially prevent mixing of exhaust flow FE and the cooling fluid (e.g., using solid wall 205).

In examples, condenser 162 includes a condenser inlet 208 and a condenser outlet 210 in fluidic communication with condenser inlet 208. Water extraction system 124 may be configured such that condenser inlet 208 receives exhaust flow FE at a condenser inlet temperature and condenser outlet 210 discharges cooled exhaust flow FC at a condenser outlet temperature less than the condenser inlet temperature (e.g., when condenser 162 receives the cooling fluid). Water extraction system 124 may be configured such that condenser inlet 208 receives exhaust flow FE at a condenser inlet pressure and condenser outlet 210 discharges cooled exhaust flow FC at a condenser outlet pressure less than the condenser inlet pressure (e.g., when condenser 162 receives the cooling fluid). In examples, condenser inlet 208 is configured to receive exhaust flow FE from reheater 170 (e.g., via the third portion of pipe 174). Condenser outlet 210 may be configured to discharge cooled exhaust flow FC to extractor 164. In examples, condenser outlet 210 is configured to discharge cooled exhaust flow FC to extractor 164 via a pipe or other conduit 216 ("pipe 216") configured to convey cooled exhaust flow FC to extractor 164.

In examples, condenser 162 includes a coolant inlet 212 and a coolant outlet 214 in fluidic communication with coolant inlet 212. Condenser 162 may be configured to receive the cooling fluid (e.g., turbine exhaust FT) via coolant inlet 212. Condenser 162 may be configured to discharge the cooling fluid via coolant outlet 214. Water extraction system 124 may be configured such that coolant inlet 212 receives the cooling fluid (e.g., turbine exhaust FT) at a cooling fluid inlet temperature and coolant outlet 214 discharges the cooling fluid at a cooling fluid outlet temperature greater than the cooling fluid inlet temperature (e.g., condenser 162 receives turbine exhaust FT and/or another cooling fluid).

In examples, coolant inlet 212 is configured to receive the cooling fluid (e.g., turbine exhaust FT from turbine 166) via a pipe or other conduit 218 ("pipe 218") configured to convey the cooling fluid to coolant inlet 212. Coolant outlet 214 may be configured to discharge the cooling fluid (e.g., turbine exhaust FT) to exhaust discharge 128.

Extractor 164 is configured to substantially separate a liquid phase (e.g., a water liquid phase) of cooled exhaust flow FC and a vapor phase (e.g., a water vapor phase) of cooled exhaust flow FC. Extractor 164 is configured to discharge at least some portion of the liquid phase as water flow WS and discharge dehumidified exhaust flow FH. For example, extractor 164 may be a vane pack separator (e.g., including vanes and/or meshes configured to entrain and/or trap moisture within cooled exhaust flow FC), a centrifugal separator (e.g., configured to separate moisture from cooled exhaust flow FC using centrifugal force), a vertical separator (e.g., configured to separate moisture from cooled exhaust flow FC using gravity), or some other type of separator configured to separate a liquid phase of a fluid and a vapor phase of the fluid.

In examples, extractor 164 is configured to extract at least 50% of a water content from cooled exhaust flow FC, such as at least 60%, at least 70%, and/or at least 80%. The water content may be, for example, a mass of liquid water per a volume of cooled exhaust flow FC. In examples, extractor 164 is configured such that cooled exhaust flow FC has a first moisture content and dehumidified exhaust flow has a second moisture content (e.g., a mass of liquid water per a volume of dehumidified exhaust flow FH) less than the first moisture content. In examples, the second moisture content is less than about 40%, less than about 30%, and/or less than about 20% of the first moisture content.

In examples, extractor 164 includes an extractor inlet 220, a liquid outlet 222, and a vapor outlet 224. Liquid outlet 222 and/or vapor outlet 224 may be in fluidic communication with extractor inlet 220. Extractor 164 may be configured to receive cooled exhaust flow FC via extractor inlet 220 and discharge water flow WS via liquid outlet 222 and dehumidified exhaust flow FH via vapor outlet 224. In examples, extractor inlet 220 is configured to receive cooled exhaust flow FC via pipe 216. Liquid outlet 222 may be configured to discharge water flow WS to water distribution system 126 (e.g., via pipe 130). Vapor outlet 224 may be configured to discharge dehumidified exhaust flow FH to reheater 170 (e.g., to reheater secondary inlet 194 via, for example, pipe 198).

Turbine 166 may be configured such that dehumidified exhaust flow FH expands as dehumidified exhaust flow FH proceeds from turbine inlet 226 to turbine outlet 228. In examples, water extraction system 124 is configured such that turbine inlet 226 receives dehumidified exhaust flow FH from reheater secondary outlet 196 (e.g., via pipe 202). Water extraction system 124 may be configured such that turbine outlet 228 discharges turbine exhaust FT to coolant inlet 212 (via a pipe or other conduit 230 ("pipe 230") configured to convey turbine exhaust FT to coolant inlet 212.

In some examples, water extraction system 124 configured to increase a pressure of exhaust flow FE prior to transferring heat from exhaust flow FE using condenser 162. Conducting the heat transfer within condenser 162 at the increased pressure may increase the condensation of water from exhaust flow FE as the heat transfer occurs, as compared to a heat transfer within condenser 162 conducted at a lower pressure (e.g., a pressure substantially equal to a pressure of exhaust FA). For example, increasing the pressure of exhaust flow FE may result in an increase in density and/or an increase in the velocity of exhaust flow FE within condenser 162, increasing the heat transfer from and/or condensation of exhaust flow FE.

For example, water extraction system 124 may be configured to increase the pressure of exhaust flow FE using an exhaust compressor 280 (FIG. 4). Exhaust compressor 280 may be configured to receive exhaust flow FE at an inlet pressure and discharge exhaust flow FE at an outlet pressure greater than the inlet pressure. Condenser 162 may be configured to transfer heat from pressurized exhaust flow at the elevated pressure caused by the compression of exhaust compressor 280. Providing exhaust flow FE to condenser 162 at the elevated pressure may increase the heat transfer from exhaust flow FE as exhaust flow FE flows through condenser 162. For example, the elevated pressure of exhaust flow FE entering condenser 162 may increase a flow rate of exhaust flow FE through condenser 162, increasing the heat transfer from exhaust flow FE to condenser 162. The elevated pressure of exhaust flow FE entering condenser 162 may increase a density of exhaust flow FE within condenser 162, causing increased condensation as exhaust flow FE flows through condenser 162. Thus, in examples, condenser 162 is able to increase a condensation from the vapor phase to the liquid phase over that which might otherwise occur in the absence of a compression by exhaust compressor 280.

Exhaust compressor 280 may be configured to compress exhaust flow FE using an exhaust compressor power supplied to exhaust compressor 280. The exhaust compressor power CP may be mechanical power (e.g., from turbine 166), electrical power (e.g., from fuel cell assembly 102), or a combination of mechanical power and electrical power. In some examples, exhaust compressor 280 may be configured to discharge exhaust flow FE at an outlet pressure at least 1.5 times that of the inlet pressure in some examples, at least 2 times that of the inlet pressure in some examples, and/or at least 3 times that of the inlet pressure in some examples.

Fuel cell stack 104 may comprise any suitable fuel cells, including externally manifolded and/or internally manifolded stacks. For example, a fuel cell such as fuel cell 106 may be internally manifolded for fuel and an oxidizer (e.g., oxygen and/or air) with fuel and oxidizer risers extending through openings in fuel cell layers and/or in interconnect plates between fuel cell 106 and one or more other fuel cells in fuel cell stack 104. Alternatively, fuel cell 106 may be internally manifolded for fuel and externally manifolded for the oxidizer, where only fuel channels and exhaust risers extend through openings in fuel cell layers and/or in the interconnect plates. Fuel cell 106 may be configured for a cross flow configuration (where fuel and the oxidizer flow roughly perpendicular to each other on opposite sides of an electrolyte or membrane in fuel cell 106), a counter flow parallel configuration (where fuel and the oxidizer flow roughly parallel to each other but in opposite directions on the opposite sides), and/or co-flow parallel configuration (where fuel and the oxidizer flow roughly parallel to each other in the same direction on the opposite sides. Fuel cell 106 may include end plates configured to conduct electricity generated by fuel cell 106 out of fuel cell stack 104. In some examples, fuel cell 106 includes cooling channels configured to receive a cooling fluid.

Communication links 133, 137, 139, 141, 146, 148, 150, 154, 158, 180, 236, 278 may be hard-line and/or wireless communications links. In some examples, Communication links 133, 137, 139, 141, 146, 148, 150, 154, 158, 180, 236, 278 may comprise some portion of control circuitry 142. In some examples, Communication links 133, 137, 139, 141, 146, 148, 150, 154, 158, 180, 236, 278 may comprise a wired connection, a wireless Internet connection, a direct wireless connection such as wireless LAN, Bluetooth^{™}, Wi-Fi^{™}, and/or an infrared connection. Communication links 133, 137, 139, 141, 146, 148, 150, 154, 158, 180, 236, 278 may utilize any wireless or remote communication protocol.

In examples, control circuitry 142 may include any one or more of a microcontroller (MCU), e.g., a computer on a single integrated circuit containing a processor core, memory, and programmable input/output peripherals, a microcontroller (µP), e.g., a central processing unit (CPU) on a single integrated circuit (IC), a controller, a digital signal processor (DSP), an application specific integrated circuit (ASIC), a field-programmable gate array (FPGA), a system on chip (SoC) or equivalent discrete or integrated logic circuitry. A processor may be integrated circuitry, i.e., integrated processing circuitry, and that the integrated processing circuitry may be realized as fixed hardware processing circuitry, programmable processing circuitry and/or a combination of both fixed and programmable processing circuitry.

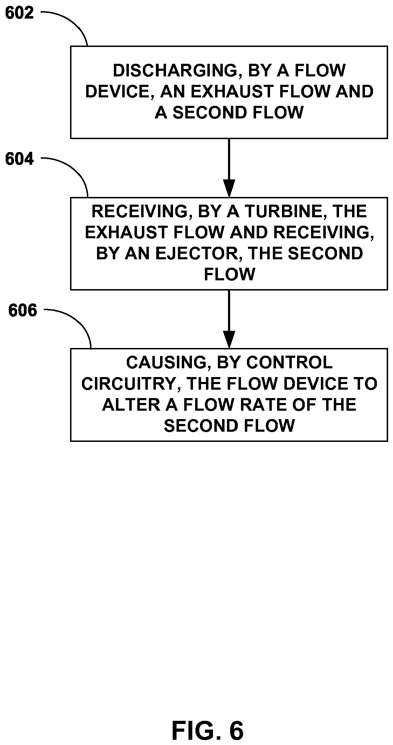

FIG. 6 illustrates a flow diagram of an example technique for extracting water from an exhaust flow of a fuel cell assembly. Although the technique is mainly described with reference to fuel cell system 100 and the components thereof (FIGS. 1-5), the technique may be used with other systems in other examples. In addition, control circuitry 142 alone or in combination with control circuitry of other devices can perform any part of the technique shown in FIG. 6.

The technique includes discharging, by a flow device 161, an exhaust flow FE and a second flow F2 (602). Exhaust flow FE may comprise a first portion of an exhaust FA of a fuel cell assembly 102. Second flow F2 may comprise a second portion of exhaust FA. Fuel cell assembly 102 may receive an inlet feed FO comprising one of an oxidizing agent or a fuel at a fuel cell inlet (e.g., one of first inlet 116 or second inlet 118). Fuel cell assembly 102 may oxidize the fuel using the oxidizing agent and discharge exhaust FA at a fuel cell outlet (e.g., one of first outlet 120 or second outlet 122) fluidically coupled to the fuel cell inlet.

In examples, fuel cell assembly 102 receives a first feed F 1 and a second feed F2. Fuel cell assembly 102 may discharge a first exhaust flow F3 and a second exhaust flow F4. First exhaust flow F3 may include one or more compounds comprising atoms introduced to fuel cell assembly 102 by first feed F1 and/or one or more constituent compounds of first feed F1 which substantially pass through fuel cell assembly 102 to be discharged through a first outlet 120 via first exhaust flow F3. In examples, first exhaust flow F3 comprises water. In examples, first exhaust F3 is a cathode exhaust of fuel cell assembly 102.

Second exhaust flow F4 may include one or more compounds comprising atoms introduced to fuel cell assembly 102 by second feed F2, and/or one or more constituent compounds of second feed F2 which substantially pass through fuel cell assembly 102 to be discharged through a second outlet 122 via second exhaust flow F4. In examples, second exhaust F4 comprises water. In examples, second exhaust feed F4 is an anode exhaust of fuel cell assembly 102.

The technique includes receiving, by a turbine 166, at least a portion of exhaust flow FE, and receiving, by an ejector 163, the second flow (604). Turbine 166 may discharge a turbine exhaust FT comprising the portion of exhaust flow FE.

In examples, flow device 161 discharges exhaust flow FE to a first flow path P1 from flow device 161 to ejector 163 and discharges second flow F2 to a second flow path from flow device 161 to ejector 163. First flow path P1 may include turbine 166. Flow device 161 may discharge exhaust flow FE to first flow path P1 and discharge second flow F2 to second flow path P2, such that at least a portion of exhaust flow FE proceeds through turbine 166 via first flow path P1 as second flow F2 substantially avoids turbine 166 via second flow path P2.

Ejector 163 may receive both turbine exhaust FT from turbine 166 and second flow F2 from flow device 161. Ejector 163 may generate a suction on turbine exhaust FT using second flow F2. In examples, ejector 163 generates a low pressure region LP using second flow F2 and fluidically couples low pressure region LP to turbine exhaust FT. Ejector 163 may alter a differential pressure through turbine 166 by altering a pressure of the low pressure region LP. In examples, an alternation in second flow F2 causes ejector 163 to alter the pressure of low pressure region LP.

The technique includes causing, by control circuitry 142, flow device 161 to alter a flow rate of second flow F2 based on a signal indicative of a flow parameter (606). The signal may be indicative of a flow parameter entering, discharging from, and/or flowing through fuel cell assembly 102. In examples, one or more of flow sensor 127, flow sensor 129, and/or flow sensor 131 provides the indicative signal.

In some examples, the technique includes transferring heat, using a condenser 162, from exhaust flow FE to a turbine exhaust FT of a turbine 166. Condenser 162 may cause some portion of a water vapor phase of exhaust flow FE to condense to a water liquid phase when condenser 162 transfers the hear from exhaust flow FE. Condenser 162 may discharge a cooled exhaust flow FC including some portion of the water liquid phase and the water vapor phase. The technique may include extracting water from cooled exhaust flow FC using extractor 164. Extractor 164 may discharge a water flow W1 and a dehumidified exhaust flow FH. In examples, extractor 164 discharges water flow W1 to water distribution system 126. Water distribution system 126 may provide at least some portion of water flow W1 to inlet feed FO.

In examples, a reheater 170 transfers heat from exhaust flow FE. Reheater 170 may transfer heat from exhaust flow FE to dehumidified exhaust flow FH. Reheater 170 may provide exhaust flow FE to condenser 162. In examples, reheater 170 provides the dehumidified exhaust flow FH to turbine 166. Turbine 166 may generate a turbine power M using dehumidified exhaust flow FH and exhaust turbine exhaust FT.

In some examples, the technique includes compressing, using an exhaust compressor 160, the exhaust flow FE. Exhaust compressor 160 may compress inlet feed FO from an inlet pressure and discharge exhaust flow FE at an outlet pressure greater than the inlet pressure. In examples, second compressor discharges exhaust flow FE to an intercooler 168. Intercooler 168 may transfer heat from exhaust flow FE to a cooling fluid C1.

The techniques described in this disclosure, including those attributed to control circuitry 142 and other control circuitry, processing circuitry, sensors, or various constituent components of fuel cell system 100, may be implemented, at least in part, in hardware, software, firmware or any combination thereof. For example, various aspects of the techniques may be implemented within one or more processors, including one or more microprocessors, DSPs, ASICs, FPGAs, or any other equivalent integrated or discrete logic circuitry, as well as any combinations of such components, embodied in any suitable device. Processing circuitry, control circuitry, and sensing circuitry, as well as other processors, controllers, and sensors described herein, may be implemented at least in part as, or include, one or more executable applications, application modules, libraries, classes, methods, objects, routines, subroutines, firmware, and/or embedded code, for example. In addition, analog circuits, components and circuit elements may be employed to construct one, some or all of the control circuitry and sensors, instead of or in addition to the partially or wholly digital hardware and/or software described herein. Accordingly, analog or digital hardware may be employed, or a combination of the two.

In one or more examples, the functions described in this disclosure may be implemented in hardware, software, firmware, or any combination thereof. If implemented in software, the functions may be stored on, as one or more instructions or code, a computer-readable medium and executed by a hardware-based processing unit. The computer-readable medium may be an article of manufacture including a non-transitory computer-readable storage medium encoded with instructions. Instructions embedded or encoded in an article of manufacture including a non-transitory computer-readable storage medium encoded, may cause one or more programmable processors, or other processors, to implement one or more of the techniques described herein, such as when instructions included or encoded in the non-transitory computer-readable storage medium are executed by the one or more processors. Example non-transitory computer-readable storage media may include RAM, ROM, programmable ROM (PROM), erasable programmable ROM (EPROM), electronically erasable programmable ROM (EEPROM), flash memory, a hard disk, a compact disc ROM (CD-ROM), a floppy disk, a cassette, magnetic media, optical media, or any other computer readable storage devices or tangible computer readable media.

In some examples, a computer-readable storage medium comprises non-transitory medium. The term "non-transitory" may indicate that the storage medium is not embodied in a carrier wave or a propagated signal. In certain examples, a non-transitory storage medium may store data that can, over time, change (*e.g.,* in RAM or cache).

The functionality described herein may be provided within dedicated hardware and/or software modules. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components. Also, the techniques could be fully implemented in one or more circuits or logic elements.

The present disclosure includes the following examples.

Example 1: A system comprising: a fuel cell assembly configured to receive an inlet feed at a fuel cell inlet and discharge a fuel cell exhaust at a fuel cell outlet fluidically coupled to the fuel cell inlet, wherein the inlet feed comprises one of an oxidizing agent or a fuel, and wherein the fuel cell assembly is configured to oxidize the fuel using the oxidizing agent; a flow device configured to receive the fuel cell exhaust, discharge an exhaust flow comprising a first portion of the fuel cell exhaust and a second flow comprising a second portion of the fuel cell exhaust, and alter a flow rate of at least the second flow; a turbine configured to receive at least a portion of the exhaust flow and discharge a turbine exhaust comprising the portion of the exhaust flow; an ejector including a first inlet configured to receive the turbine exhaust and a second inlet configured to receive the second flow, wherein the ejector is configured to provide a suction on the turbine exhaust using the second flow; and control circuitry configured to: receive a signal indicative of a flow parameter, and cause the flow device to alter the flow rate of the second flow based on the flow parameter.

Example 2: The system of example 1, wherein the signal is indicative of at least one of a flow parameter of the inlet feed or a flow parameter of the fuel cell exhaust.

Example 3: The system of example 1 or example 2, further comprising a sensor configured to sense the flow parameter, wherein the sensor is configured to communicate the flow parameter to the control circuitry.

Example 4: The system of any of examples 1-3, wherein the turbine is configured to receive the portion of the exhaust flow at a turbine inlet and discharge the turbine exhaust at a turbine outlet, and wherein the ejector is configured to alter a differential pressure between the portion of the exhaust flow at the turbine inlet and the turbine exhaust at the turbine outlet when the flow device alters the flow rate of the second flow.

Example 5: The system of any of examples 1-4, wherein the turbine is configured to receive the portion of the exhaust flow at a turbine inlet and discharge the turbine exhaust at a turbine outlet, and wherein the flow device is configured to cause the second flow to bypass the turbine inlet and the turbine outlet when the flow device discharges the second flow.

Example 6: The system of any of examples 1-5, wherein the flow device is configured to alter a flow rate of the exhaust flow when the flow device alters the flow rate of the second flow.

Example 7: The system of any of examples 1-6, further comprising a condenser configured to transfer heat from the exhaust flow to the turbine exhaust.

Example 8: The system of any of examples 1-7, further comprising an intercooler configured to transfer heat from the exhaust flow prior to the condenser receiving the exhaust flow.

Example 9: The system of example 7 or example 8, further comprising an extractor configured to receive the exhaust flow from the condenser, wherein the extractor is configured to extract liquid water from the exhaust flow and discharge a first portion of the exhaust flow as a water flow and a second portion of the exhaust flow as a dehumidified exhaust flow.

Example 10: The system of example 9, further comprising a reheater configured to transfer heat from the exhaust flow to the dehumidified exhaust flow, wherein the turbine is configured to receive the portion of the exhaust flow by receiving the dehumidified exhaust flow.

Example 11: The system of example 9 or example 10, further comprising a water distribution system configured to supply at least a portion of the water extracted by the extractor to the inlet feed.

Example 12: The system of any of examples 1-11, further comprising a compressor configured to compress one of the inlet feed, the fuel cell exhaust, or the exhaust flow using a compressor power, and wherein the turbine is configured to provide at least some portion of the compressor power by extracting energy from the portion of the exhaust flow.

Example 13: The system of any of examples 1-12, wherein the compressor is a shaft-driven compressor configured to receive the portion of the compressor power from a compressor shaft, and wherein the turbine is configured to transfer the portion of the compressor power from a turbine shaft of the turbine to the compressor shaft. compress the inlet feed using a shaft power received from a shaft, first pressure to a second pressure greater than the first pressure prior to the fuel cell inlet receiving the inlet feed.

Example 14: The system of any of examples 1-13, further comprising a motor-driven compressor configured to compress the inlet feed using a motor power from a motor, wherein the motor-driven compressor is configured to compress the inlet feed prior to the shaft-driven compressor compressing the inlet feed.

Example 15: The system of any of examples 1-14, wherein the fuel cell assembly defines a cathode side and an anode side, and wherein the fuel cell assembly is configured to generate a cathode exhaust at the fuel cell outlet when the inlet feed comprises the oxidizing agent, the cathode side receives the inlet feed, and the anode side receives the fuel, and wherein the exhaust flow is at least a portion of the cathode exhaust.

Example 16: A system comprising: a fuel cell assembly configured to receive an inlet feed at a fuel cell inlet and discharge a fuel cell exhaust at a fuel cell outlet fluidically coupled to the fuel cell inlet, wherein the inlet feed comprises one of an oxidizing agent or a fuel, and wherein the fuel cell assembly is configured to oxidize the fuel using the oxidizing agent; a flow device configured to receive the fuel cell exhaust, discharge an exhaust flow comprising a first portion of the fuel cell exhaust and a second flow comprising a second portion of the fuel cell exhaust, and alter a flow rate of at least the second flow; a reheater configured to cause a first heat transfer from the exhaust flow; a condenser configured to cause a second heat transfer from the exhaust flow subsequent to the first heat transfer; an extractor configured to extract liquid water from the exhaust flow subsequent to the second heat transfer, wherein the extractor is configured to discharge a first portion of the exhaust flow as a water flow and a second portion of the exhaust flow as a dehumidified exhaust flow, and wherein the reheater is configured to transfer heat from the exhaust flow to the dehumidified exhaust flow to cause the first heat transfer; a turbine configured to receive the dehumidified exhaust flow at a turbine inlet and discharge a turbine exhaust at a turbine outlet, wherein the turbine exhaust comprises at least a portion of the dehumidified exhaust flow, and wherein the condenser is configured to transfer heat from the exhaust flow to the turbine exhaust to cause the second heat transfer; an ejector including a first inlet configured to receive the turbine exhaust and a second inlet configured to receive the second flow, wherein the ejector is configured to provide a suction on the turbine exhaust using the second flow, and wherein the ejector is configured to alter a differential pressure between the portion of the exhaust flow at the turbine inlet and the turbine exhaust at the turbine outlet when the flow device alters the flow rate of the second flow; and control circuitry configured to: receive a signal indicative of a flow parameter, and cause the flow device to alter the flow rate of the second flow based on the flow parameter.

Example 17: The system of example 16, further comprising a water distribution system configured to supply at least a portion of the water flow to the inlet feed, wherein the water flow comprises liquid water extracted by the extractor.

Example 18: The system of example 16 or example 17, further comprising an intercooler configured to transfer heat from the exhaust flow to the turbine exhaust prior to the reheater causing the first heat transfer.

Example 19: A method comprising: receiving, by an inlet of a fuel cell assembly, an inlet feed comprising one of an oxidizing agent or a fuel at a fuel cell inlet of the fuel cell assembly, wherein the fuel cell assembly is configured to oxidize the fuel using the oxidizing agent; exhausting, by an outlet of the fuel cell assembly in fluidic communication with the inlet, a fuel cell exhaust from an exhaust of the fuel cell assembly; discharging, by a flow device, an exhaust flow comprising a first portion of the fuel cell exhaust and a second flow comprising a second portion of the fuel cell exhaust; receiving, by a turbine, at least a portion of the exhaust flow; discharging, by the turbine, a turbine exhaust comprising the portion of the exhaust flow; receiving, by an ejector, the turbine exhaust at a first inlet of the ejector and the second flow at a second inlet of the ejector, wherein the ejector is configured to provide a suction on the turbine exhaust using the second flow; receiving, by control circuitry, a signal indicative of a flow parameter; and causing, by the control circuitry, the flow device to alter a flow rate of the second flow based on the flow parameter.

Example 20: The method of example 19, further comprising transferring heat, by a condenser, from the exhaust flow to the turbine exhaust.

Various examples have been described. These and other examples are within the scope of the following claims.

## Claims

1. A system comprising:
a fuel cell assembly configured to receive an inlet feed at a fuel cell inlet and discharge a fuel cell exhaust at a fuel cell outlet fluidically coupled to the fuel cell inlet, wherein the inlet feed comprises one of an oxidizing agent or a fuel, and wherein the fuel cell assembly is configured to oxidize the fuel using the oxidizing agent;
a flow device configured to receive the fuel cell exhaust, discharge an exhaust flow comprising a first portion of the fuel cell exhaust and a second flow comprising a second portion of the fuel cell exhaust, and alter a flow rate of at least the second flow;
a turbine configured to receive at least a portion of the exhaust flow and discharge a turbine exhaust comprising the portion of the exhaust flow;
an ejector including a first inlet configured to receive the turbine exhaust and a second inlet configured to receive the second flow, wherein the ejector is configured to provide a suction on the turbine exhaust using the second flow; and
control circuitry configured to:
receive a signal indicative of a flow parameter, and
cause the flow device to alter the flow rate of the second flow based on the flow parameter.

2. The system of claim 1, wherein the signal is indicative of at least one of a flow parameter of the inlet feed or a flow parameter of the fuel cell exhaust.

3. The system of claim 1 or claim 2, further comprising a sensor configured to sense the flow parameter, wherein the sensor is configured to communicate the flow parameter to the control circuitry.

4. The system of any of claims 1-3, wherein the turbine is configured to receive the portion of the exhaust flow at a turbine inlet and discharge the turbine exhaust at a turbine outlet, and wherein the ejector is configured to alter a differential pressure between the portion of the exhaust flow at the turbine inlet and the turbine exhaust at the turbine outlet when the flow device alters the flow rate of the second flow.

5. The system of any of claims 1-4, wherein the turbine is configured to receive the portion of the exhaust flow at a turbine inlet and discharge the turbine exhaust at a turbine outlet, and wherein the flow device is configured to cause the second flow to bypass the turbine inlet and the turbine outlet when the flow device discharges the second flow.

6. The system of any of claims 1-5, wherein the flow device is configured to alter a flow rate of the exhaust flow when the flow device alters the flow rate of the second flow.

7. The system of any of claims 1-6, further comprising a condenser configured to transfer heat from the exhaust flow to the turbine exhaust.

8. The system of claim 7, further comprising an intercooler configured to transfer heat from the exhaust flow prior to the condenser receiving the exhaust flow.

9. The system of claim 7 or claim 8, further comprising an extractor configured to receive the exhaust flow from the condenser, wherein the extractor is configured to extract liquid water from the exhaust flow and discharge a first portion of the exhaust flow as a water flow and a second portion of the exhaust flow as a dehumidified exhaust flow.

10. The system of claim 9, further comprising a reheater configured to transfer heat from the exhaust flow to the dehumidified exhaust flow, wherein the turbine is configured to receive the portion of the exhaust flow by receiving the dehumidified exhaust flow.

11. The system of claim 9 or claim 10, further comprising a water distribution system configured to supply at least a portion of the water extracted by the extractor to the inlet feed.

12. The system of any of claims 1-11, further comprising a compressor configured to compress one of the inlet feed, the fuel cell exhaust, or the exhaust flow using a compressor power, and wherein the turbine is configured to provide at least some portion of the compressor power by extracting energy from the portion of the exhaust flow.

13. The system of claim 12, wherein the compressor is a shaft-driven compressor configured to receive the portion of the compressor power from a compressor shaft, and wherein the turbine is configured to transfer the portion of the compressor power from a turbine shaft of the turbine to the compressor shaft.

14. The system of claim 13, wherein the shaft-driven compressor is configured to compress the inlet feed, and further comprising a motor-driven compressor configured to compress the inlet feed using a motor power from a motor, wherein the motor-driven compressor is configured to compress the inlet feed prior to the shaft-driven compressor compressing the inlet feed.

15. A method comprising,
receiving, by an inlet of a fuel cell assembly, an inlet feed comprising one of an oxidizing agent or a fuel at a fuel cell inlet of the fuel cell assembly, wherein the fuel cell assembly is configured to oxidize the fuel using the oxidizing agent;
exhausting, by an outlet of the fuel cell assembly in fluidic communication with the inlet, a fuel cell exhaust from an exhaust of the fuel cell assembly;
discharging, by a flow device, an exhaust flow comprising a first portion of the fuel cell exhaust and a second flow comprising a second portion of the fuel cell exhaust;
receiving, by a turbine, at least a portion of the exhaust flow;
discharging, by the turbine, a turbine exhaust comprising the portion of the exhaust flow;
receiving, by an ejector, the turbine exhaust at a first inlet of the ejector and the second flow at a second inlet of the ejector, wherein the ejector is configured to provide a suction on the turbine exhaust using the second flow;
receiving, by control circuitry, a signal indicative of a flow parameter; and causing, by the control circuitry, the flow device to alter a flow rate of the second flow based on the flow parameter.
